# EUROPÄISCHE PATENTANMELDUNG

(11) **EP 2 423 241 A1**
(43) Veröffentlichungstag der Anmeldung: **29.02.2012**
(21) Anmeldenummer: 11005787.4
(22) Anmeldetag: 15.07.2011
(51) Int. Cl.: C08G 61/10, C08G 61/12, C08J 9/00

(54) **Einheit mit porösen organischen Polymeren und deren Verwendung**

(30) Priorität: 24.07.2010 DE 102010032195
(71) Anmelder: Blücher GmbH, 40699 Erkrath (DE)
(72) Erfinder: Böhringer, Bertram, Dr., 42115 Wuppertal (DE); Fichtner, Sven, Dipl.-Ing., 14727 Premnitz (DE); Kaskel, Stefan, Prof. Dr., 01069 Dresden (DE); Rose, Marcus, Dr., 01069 Dresden (DE)
(74) Vertreter: Strehlke, Ingo Kurt

(57) **Zusammenfassung**

Die Erfindung betrifft eine Einheit, welche eine Mehrzahl von Partikeln auf Basis von porösen organischen Polymeren umfaßt, wobei die organischen Polymere durch Kreuzkupplung, insbesondere Suzuki-Kupplung, von Arylboronsäuren mit Halogenaromaten erhältlich sind, sowie die verschiedenen Verwendungen bzw. Anwendungsmöglichkeiten dieser Einheit.

## Beschreibung

Die vorliegende Erfindung betrifft eine Einheit aus einer Mehrzahl von Partikeln auf Basis von porösen organischen Polymeren sowie die Verwendung dieser Einheit, insbesondere für das Gebiet der Filtration, der Gasreinigung, der Katalyse, der Gasspeicherung und der Sorption, insbesondere Adsorption, vorzugsweise von Gasen.

Des Weiteren betrifft die vorliegende Erfindung die Verwendung der erfindungsgemäßen Einheit in Filtern und Filtermaterialien, insbesondere textilen Filtern und Filtermaterialien, in Gasreinigungsvorrichtungen, in Katalysatoren, in Gasspeichern, sowie in Schutzbekleidung, insbesondere ABC-Schutzbekleidung.

Weiterhin betrifft die vorliegende Erfindung die Verwendung der erfindungsgemäßen Einheit zur Entfernung von Schad-, Geruchs- und Giftstoffen aller Art, insbesondere aus Luft- und/oder Gasströmen, beispielsweise in ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

Schließlich betrifft die vorliegende Erfindung Filter und Filtermaterialien, insbesondere textile Filter und Filtermaterialien, sowie Gasreinigungsvorrichtungen, Katalysatoren, Gasspeicher und Schutzbekleidung, insbesondere ABC-Schutzbekleidung, welche jeweils unter Verwendung der erfindungsgemäßen Einheit hergestellt sind bzw. welche jeweils die erfindungsgemäße Einheit aufweisen.

Die Entwicklung neuartiger poröser, insbesondere mikroporöser Materialien, insbesondere Adsorbenzien, ist ein wichtiger Zweig in den Materialwissenschaften. Viele Anwendungsgebiete verlangen nach leistungsfähigeren Materialien, und eine Vielzahl potenzieller, neuer Anwendungsgebiete hat sich in den letzten Jahren ergeben.

Bedarf an neuartigen porösen Materialien, insbesondere Adsorbenzien, besteht auf dem Gebiet der Speicherung verschiedener Gase, wie z. B. Wasserstoff, Methan etc., aber auch diverser Spezialgase; für Gase mit hoher Toxizität oder Explosionsgefahr kann beispielsweise durch adsorptive Speicherung das Gefährdungspotential herabgesetzt werden bzw. die Speicherkapazität erhöht werden.

Neue mikroporöse Materialien können aber auch Anwendung in der heterogenen Katalyse, insbesondere als Katalysator oder Katalysatorträger mit sehr hohen spezifischen Oberflächen und homogen verteilten aktiven Zentren, finden. Zudem sind Anwendungen in der Stofftrennung und Stoffreinigung, in selektiven Membranen, in der Sensortechnik etc. denkbar.

Die meisten kommerziell verwendeten mikroporösen Adsorbenzien sind anorganische Materialien, wie z. B. Zeolithe, Klathrate, Aktivkohle etc., welche aber teilweise höheren Anforderungen nicht mehr gerecht werden und durch leistungsfähigere neue Adsorbenzien ersetzt werden können.

In den letzen Jahren sind eine ganze Reihe neuer poröser bzw. mikroporöser Materialien bzw. Materialklassen auf rein organischer Basis oder auf Hybridbasis (z. B. organisch-anorganisch basierte Hybridpolymere) entwickelt worden.

Poröse Polymere aus Sicht der klassischen Polymerchemie sind die ersten auf diesem Gebiet. Erste Ergebnisse auf dem Gebiet der hochvernetzten Polymere (HCPs bzw. *Hypercrosslinked Polymers)* wurden bereits im Jahr 1969 publiziert. Die als so genannte Davankov-Harze bekannten hochvernetzten Polystyrole werden seit den 1990er Jahren kommerziell hergestellt und als Ionenaustauscherharze und Adsorptionsmittel verwendet.

Die Synthese hochvernetzter Polymere geht im allgemeinen von vorvernetzten Polymeren aus, die in einem geeigneten Lösungsmittel aufgequollen werden, wodurch zwischen den Polymerketten freier Raum entsteht. Im zweiten Schritt werden dann die gequollenen Ketten durch geeignete Reaktionen, wie z. B. Friedel-Crafts-Alkylierung etc., vernetzt. Wird dann das Lösemittel entfernt, bleiben die verbrückten Ketten starr voneinander getrennt, und der vormals freie Raum ist als Porenraum zugänglich. Es werden im Fall der Davankov-Harze spezifische Oberflächen von bis zu ca. 1.500 m²/g erreicht, und zwar mit Porengrößen die im Grenzbereich von Mikro- und Mesoporen liegen. In jüngster Zeit wurden aber auch andere HCPs, wie z. B. hochvernetzte Polyaniline, hergestellt.

Im Gegensatz zu HCPs, die postsynthetisch vernetzt werden, gibt es auch mikroporöse Polymere, die durch Einsatz von polyfunktionellen Monomeren hergestellt werden. Dadurch wird ebenfalls ein Netzwerk mit Porenraum erhalten, das durch seine Starrheit nicht kollabieren kann. Bekannt ist beispielsweise die Synthese von Polyamiden (PA) und Polyimiden (PI) mit einem tetrafunktionellen Spirobifluorenmonomer; die Polyimid-Netzwerke weisen spezifische Oberflächen von etwa 1.000 m²/g auf, während die Polyamid-Netzwerke ein zu kleines Porensystem haben, welches für Stickstoffmoleküle nicht zugänglich ist.

Eine größere neue Klasse poröser Polymere, die in den letzten Jahren stark gewachsen ist, stellen die Polymere intrinsischer Mikroporosität (PIMs) dar. Synthetische Grundlage ist eine Kondensationsreaktion von aromatischen Monomeren mit Hydroxylgruppen und fluorierten oder chlorierten aromatischen Monomeren unter Bildung von Dioxanringen. Die entstehenden Polymere liegen im Gegensatz zu den vorgenannten HCPs nicht in hochvernetzter Form vor. Die Porosität kommt bei den PIMs durch eine ineffektive Packung der Polymerketten im Raum zustande, die aus der Starrheit der Monomermoleküle resultiert. Eine dichte Packung wird durch starre Ketten verhindert, und freier Porenraum bleibt zugänglich. Es wurden Oberflächen von bis zu ca. 1.065 m²/g beschrieben. Eine besondere Eigenschaft der PIMs ist die Kombination von Mikroporosität und Löslichkeit. Durch Lösen und Wiederentfernen des Lösemittels bleibt die Porosität erhalten, was die Verarbeitung der PIMs stark vereinfacht und neue Anwendungsmöglichkeiten eröffnet; z. B. wird die Herstellung von mikroporösen Membranen zur Trennung von Gasen, wie Kohlenstoffdioxid und Methan, oder die Adsorption von Phenol aus wässriger Lösung beschrieben.

Für alle vorgenannten mikroporösen Polymere wurden zahlreiche Untersuchungen zur Speicherung von Gasen, wie Wasserstoff und Methan, durchgeführt. Ein Nachteil poröser Polymere in der Gasspeicherung ist ihre geringe Dichte, da sie nur aus leichten Elementen bestehen. Dies führt - unabhängig vom Gas - zu relativ schlechten volumetrischen Speicherkapazitäten.

Ein weiterer Nachteil der bisher genannten porösen Polymere ist, dass ungeordnete Netzwerke mit meist breiten Porengrößenverteilungen vorliegen. Für sehr hohe spezifische Oberflächen mit guter Zugänglichkeit sind aber geordnete Netzwerke von Vorteil. Außerdem lassen sich die Poren dann durch einen modularen Aufbau der Gerüste für entsprechende Eigenschaften und Anwendungen maßschneidern.

Dieses Konzept ist in den mikroporösen metallorganischen Gerüstmaterialien bzw. Koordinationspolymeren (auch MOFs bzw. *Metall Organic Frameworks* genannt) umgesetzt. MOFs sind aus polyfunktionellen Molekülen (wie z. B. Carboxylaten) als organische Linker und Metallionen oder Metallcluster als anorganische Konnektoren aufgebaut. Diese dreidimensionalen Koordinationspolymere sind kristalline Verbindungen mit extrem hohen spezifischen Oberflächen. Nachteile fast aller MOFs sind aber die zumeist stark ausgeprägte Hydrolyseempfindlichkeit und eine gewisse Toxizität, welche in Abhängigkeit von der Art des Metalls auftreten kann (z. B. im Fall von Chrom etc.).

Im Gegensatz dazu sind fast alle porösen Polymere hydrolysestabil, da ausschließlich starke kovalente Bindungen auftreten. Außerdem kann in Polymeren eine Toxizität durch Metalle ausgeschlossen werden, da sie nur aus leichten Elementen aufgebaut sind.

Das modulare Prinzip, nach dem MOFs aufgebaut sind, wurde auf kovalent gebundene, metallfreie Netzwerkverbindungen (COFs bzw. *Covalent Organic Frameworks*) übertragen. COFs werden durch Kondensationsreaktion von polyfunktionellen Boronsäuren entweder direkt untereinander zu Boroxinringen (B₃O₃) oder zusammen mit hydroxylfunktionalisierten Aromaten zu C₂O₂BRingen synthetisiert. Das Bauprinzip entspricht dem der MOFs, nur dass statt Metallionen oder Metallcluster Bor und Sauerstoff enthaltende Ringe als Konnektoren zwischen den organischen Linkern dienen. Die COFs sind die ersten kovalent gebundenen Netzwerke, die eine Ordnung aufweisen. Außerdem zeichnen sie sich durch relativ hohe spezifische Oberflächen aus, die mit denen der MOFs durchaus mithalten können. Nachteil der COFs ist die Hydrolyseempfindlichkeit der Boroxinringe, so dass die Verbindungen nach längerer Zeit unter Luftfeuchtigkeit zersetzt werden.

Es ist nunmehr die Aufgabe der vorliegenden Erfindung, Partikel auf Basis von porösen organischen Polymeren, insbesondere eine Einheit aus einer Mehrzahl von Partikeln auf Basis von porösen organischen Polymeren, bereitzustellen, welche die zuvor geschilderten Nachteile des Standes der Technik zumindest weitgehend vermeiden bzw. vermeidet oder aber wenigstens abschwächen bzw. abschwächt.

Eine weitere Aufgabe der vorliegenden Erfindung besteht in der Bereitstellung von Partikeln auf Basis von porösen organischen Polymeren, insbesondere einer Einheit aus einer Mehrzahl von Partikeln auf Basis von porösen organischen Polymeren, welche eine universelle Anwendbarkeit gewährleisten und sich insbesondere für das Gebiet der Filtration, für die Gasreinigung, für die Katalyse, für die Gasspeicherung und/oder für die Sorption, insbesondere Adsorption, vorzugsweise von Gasen, eignen.

Zur Lösung der zuvor geschilderten Aufgabenstellung schlägt die vorliegende Erfindung - gemäß einem ersten Aspekt der vorliegenden Erfindung - eine eine Mehrzahl bzw. Vielzahl von Partikeln auf Basis von porösen organischen Polymeren umfassende Einheit gemäß Anspruch 1 vor; weitere, vorteilhafte Ausgestaltungen dieses Erfindungsaspekts sind der Gegenstand der betreffenden Unteransprüche.

Weiterer Gegenstand der vorliegenden Erfindung - gemäß weiteren Aspekten der vorliegenden Erfindung - ist die Verwendung der erfindungsgemäßen, eine Mehrzahl von Partikeln auf Basis von porösen organischen Polymeren umfassenden Einheit gemäß den Ansprüchen 14 bis 16.

Wiederum weiterer Gegenstand der vorliegenden Erfindung sind - gemäß einem wiederum weiteren Aspekt der vorliegenden Erfindung - die in Anspruch 17 definierten Filter und Filtermaterialien, insbesondere textile Filter und Filtermaterialien, sowie Gasreinigungsvorrichtungen, Katalysatoren, Gasspeicher und Schutzbekleidung, insbesondere ABC-Schutzbekleidung, welche jeweils unter Verwendung der erfindungsgemäßen Einheit hergestellt sind bzw. welche jeweils die erfindungsgemäße Einheit aufweisen.

Es versteht sich von selbst, dass im Folgenden besondere Ausgestaltungen, Ausführungsformen oder dergleichen, welche nur im Zusammenhang mit einem Erfindungsaspekt beschrieben sind, auch in Bezug auf die anderen Erfindungsaspekte entsprechend gelten, ohne dass dies einer ausdrücklichen Erwähnung bedarf.

Weiterhin ist bei allen nachstehend genannten relativen bzw. prozentualen, insbesondere gewichtsbezogenen Mengenangaben zu beachten, dass diese im Rahmen der vorliegenden Erfindung vom Fachmann derart auszuwählen sind, dass in der Summe stets 100 % resultieren. Dies versteht sich für den Fachmann aber von selbst.

Im Übrigen gilt, dass der Fachmann anwendungsbezogen oder einzelfallbedingt von den nachfolgend aufgeführten Zahlen-, Bereichs- oder Mengenangaben abweichen kann, ohne dass er den Rahmen der vorliegenden Erfindung verlässt.

Im Übrigen gilt, dass alle im folgenden genannten Parameterangaben oder dergleichen grundsätzlich mit genormten oder explizit angegebenen Bestimmungsverfahren oder aber mit dem Fachmann an sich geläufigen Bestimmungsmethoden bestimmt werden können.

Die Anmelderin hat in völlig überraschender Weise herausgefunden, dass das der vorliegenden Erfindung zugrundeliegende Problem, wie es zuvor geschildert worden ist, durch eine aus einer Mehrzahl von Partikeln auf Basis von porösen organischen Polymeren bestehenden Einheit gelöst werden kann, bei welcher die organischen Polymere durch Kreuzkupplung, insbesondere Suzuki-Kupplung, von Arylboronsäuren einerseits mit Halogenaromaten andererseits erhältlich sind.

Der Begriff der Mehrzahl oder synonym Vielzahl, wie er erfindungsgemäß verwendet wird, bezeichnet insbesondere mindestens 10 Partikel, insbesondere mindestens 100 Partikel, vorzugsweise mindestens 1.000 Partikel, besonders bevorzugt mindestens 10.000 Partikel, ganz besonders bevorzugt mindestens 100.000 Partikel, noch mehr bevorzugt mindestens 1.000.000 Partikel, je erfindungsgemäßer Einheit, wobei die Anzahl der Partikel je erfindungsgemäßer Einheit bis zu mehreren Millionen oder sogar mehreren Milliarden Partikel oder mehr betragen kann.

Gegenstand der vorliegenden Erfindung - gemäß einem **ersten** Aspekt der vorliegenden Erfindung - ist somit eine Einheit, welche eine Mehrzahl von Partikeln auf Basis von porösen organischen Polymeren umfasst, wobei die organischen Polymere durch Kreuzkupplung, insbesondere Suzuki-Kupplung, von Arylboronsäuren mit Halogenaromaten erhältlich sind.

Wie die Anmelderin nämlich in überraschender wie vollkommen unerwarteter Weise herausgefunden hat, lassen sich durch Kreuzkupplung, insbesondere Suzuki-Kupplung, von Arylboronsäuren mit Halogenaromaten poröse organische Polymerpartikel, insbesondere in Form einzelner Partikel oder in Form von Agglomeraten von Partikeln, herstellen, welche über ein inneres Porensystem bzw. über eine Porenstruktur verfügen, was eine universelle Anwendbarkeit ermöglicht, beispielsweise auf dem Gebiet der Filtration, der Gasreinigung, der Katalyse, der Gasspeicherung sowie der Sorption, insbesondere Adsorption.

Die durch Kreuzkupplung, insbesondere Suzuki-Kupplung, von Arylboronsäuren mit Halogenaromaten erhältlichen Polymere bzw. Polymerpartikel - nachfolgend gelegentlich synonym auch als "OFS" (*Organic Frameworks via Suzuki-Coupling*), "OFS-Materialien", "OFS-Verbindungen", "OFS-Polymere" oder dergleichen bezeichnet - verfügen über poröse, insbesondere mikroporöse, und im allgemeinen hydrophobe bzw. unpolare Polymernetzwerke, welche sie für die vorgenannten Anwendungen besonders geeignet erscheinen lassen.

Im Rahmen der vorliegenden Erfindung wird somit eine neue Verbindungsklasse poröser, insbesondere mikroporöser, im Allgemeinen rein organisch basierter polymerer Netzwerkverbindungen bereitgestellt, welche über eine Kreuzkupplung, insbesondere über übergangsmetallkatalysierte, vorzugsweise palladiumkatalysierte Suzuki-Kupplung, synthetisiert werden. Diese porösen organischen Polymerpartikel weisen hohe spezifische BET-Oberflächen auf, wie nachfolgend noch näher spezifiziert, und besitzen im Allgemeinen eine hydrophobe, insbesondere stark hydrophobe Oberfläche, weshalb sie insbesondere zur Adsorption unpolarer Stoffe geeignet sind. Die amorphen polymeren Materialien sind thermisch stabil, wie nachfolgend näher beschrieben, und zeigen keine Zersetzungserscheinungen in protischer, insbesondere wässriger Umgebung, was eine leichte Handhabung ermöglicht. Die erfindungsgemäß eingesetzten OFS-Verbindungen sind synthetisch einfach zugänglich und bieten durch ihre chemische und thermische Stabilität vielseitige Anwendungsmöglichkeiten, insbesondere im Hinblick auf adsorptive Trennprozesse.

Bislang wurde die an sich bekannte synthetische Methode der Kreuzkupplung, insbesondere der Suzuki-Kupplung, nur zur Herstellung relativ kleiner Moleküle angewendet. Erst im Rahmen der vorliegenden Erfindung sind erstmals poröse organische Polymernetzwerke, insbesondere auf Basis partikulärer Systeme, durch diese Synthesemethode hergestellt worden. Die Anmelderin hat in überraschender Weise herausgefunden, dass über die an sich bekannte synthetische Methode der Kreuzkupplung, insbesondere Suzuki-Kupplung, welche zur Knüpfung von aromatischen C-Bindungen führt, die Synthese von Polymernetzwerken ermöglicht wird, so dass es auf diese Weise überraschenderweise möglich ist, poröse Adsorbenzien über diese Methode maßzuschneidern. Die Synthese kann im Hinblick auf die Anwendungseigenschaften, insbesondere die spezifische Oberfläche oder andere Parameter, dieser Verbindungen optimiert werden. Die auf diese Weise hergestellten Verbindungen sind stark hydrophob und übertreffen mit dieser Eigenschaft die meisten kommerziell verfügbaren Adsorbenzien, wie z. B. Aktivkohle. Somit sind sie sehr gut zur Adsorption von unpolaren Verbindungen, wie Kohlenwasserstoffen, geeignet. Darüber hinaus weisen die mittels Kreuzkupplung, insbesondere Suzuki-Kupplung, hergestellten Netzwerkverbindungen eine sehr gute Quellfähigkeit.

Was die im Rahmen der vorliegenden Erfindung angewandte Synthesemethode als solche anbelangt, so ist diese per se dem Fachmann bekannt, so dass es diesbezüglich keiner weiterführenden Ausführungen bedarf.

Die Suzuki-Kupplung im Allgemeinen ist eine dem Fachmann an sich bekannte Reaktion der organischen Chemie zur Bildung von Biphenylderivaten oder Vinylaromaten durch Kreuzkupplung. Hierbei werden Arylboronsäuren mit Halogenaromaten unter katalytischer Verwendung von Palladium, insbesondere Palladium-Phosphin-Komplexen bzw. Palladium-Phosphan-Komplexen, umgesetzt. Die Suzuki-Kupplung ist mit der so genannten Heck-Reaktion eng verwandt und besitzt dementsprechend einen ähnlichen Reaktionsmechanismus.

In den Anfängen der Suzuki-Kupplung konnten mit Hilfe von Tetrakis-(triphenylphosphin)-Palladium(0) Pd(PPh₃)₄ als Katalysator lediglich Halogenaromaten mit hoher Reaktivität (z. B. Abgangsgruppe aufsteigend von Brom über Triflat nach Iod) umgesetzt werden, während schwächer reaktive Chloraromaten erst in den letzten Jahren mit speziellen Palladium-Phosphinligand-Katalysatoren zur Reaktion gebracht werden konnten. Ebenso können durch geeignete Katalysatorauswahl unaktivierte Alkylbromide bei Raumtemperatur umgesetzt werden, ohne dass es zu einer β-Hydrideliminierung kommt. Zur Vereinfachung der Aufarbeitung können die Katalysatorliganden vielfach modifiziert werden, um beispielsweise das Arbeiten in leicht trennbaren Mehrphasensystem (wässrig/organisch, organisch/perfluoriert etc.) zu ermöglichen. Im Allgemeinen wird die Suzuki-Kupplung im basischen Milieu durchgeführt, wobei als Basen für die Reaktion neben Carbonaten (z. B. Na₂CO₃) beispielsweise auch NaOH, Natriumethanolat, Natriumphosphat etc. verwendet werden können.

Das Reaktionsschema der Suzuki-Kupplung kann durch die nachfolgende Reaktionsgleichung veranschaulicht werden, wobei in diesem vereinfachten Schema der Rest "R" einen organischen Rest (z. B. Alkyl) und der Rest "X" eine Abgangsgruppe, insbesondere Halogen (z. B. Brom oder Iod) oder Triflat, darstellt:

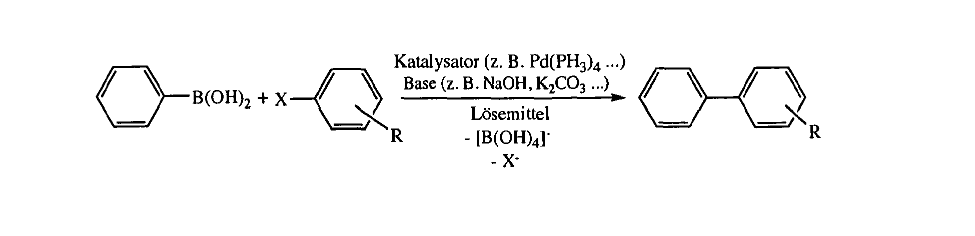

Der Katalysezyklus der Suzuki-Kupplung ist in dem nachfolgenden Schema vereinfachend veranschaulicht, wobei dort die Reste "Ar" und "Ar' ", jeweils unabhängig voneinander, einen Arylrest bezeichnen und "X" eine geeignete Abgangsgruppe (z. B. Halogen oder Triflat) darstellt:

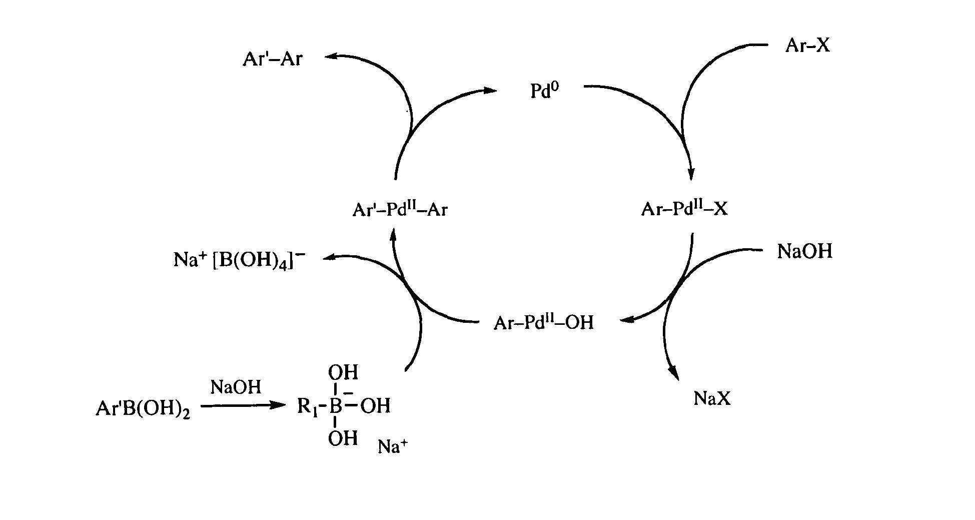

Gemäß dem Stand der Technik hat die Suzuki-Kupplung ihre größte Bedeutung bislang in der Synthese von Naturstoffen; als Beispiel kann diesbezüglich die Synthese des Antibiotikums Vancomycin oder des Fungizids Boscalid angeführt werden. Denn Borverbindungen sind weniger giftig als Verbindungen alternativer Verfahren. Auch in der Synthese von Flüssigkristallen, welche meist aus Biphenylstrukturen bestehen, kann die Suzuki-Kupplung enormen synthetischen Aufwand ersparen, da sie sehr selektiv ist.

In vollkommen überraschender Weise wird diese Synthesemethode aber im Rahmen der vorliegenden Erfindung erstmals zur Herstellung poröser organischer Polymerpartikel angewendet, was vielfältige Anwendungsmöglichkeiten bietet, wie nachfolgend noch im Einzelnen ausgeführt.

Im Rahmen der vorliegenden Erfindung hat die Anmelderin erstmals und überraschenderweise herausgefunden, dass die erfindungsgemäß eingesetzten OFS-Materialien sich aufgrund ihrer Porosität in ausgezeichneter Weise für die vorgenannten Anwendungen eignen und in Bezug auf diese Anwendungen überraschenderweise zu der Leistungsfähigkeit herkömmlicher poröser Materialien zumindest gleichwertig sind, wenn nicht sogar die Leistungsfähigkeit der herkömmlichen porösen Materialien übertreffen.

In diesem Zusammenhang von Bedeutung ist auch die Tatsache, dass aufgrund der im Rahmen des Herstellungsverfahrens der OFS-Materialien einstellbaren bzw. maßschneiderbaren Porosität, insbesondere Porengröße und/oder Porengrößenverteilung und/oder spezifische Oberfläche, eine hohe Selektivität in Bezug auf das Sorptionsverhalten, insbesondere Adsorptionsverhalten, erreicht werden kann, wobei die Porosität, insbesondere die Porengröße und/oder Porengrößenverteilung, beispielsweise über die Art und/oder Größe der eingesetzten Ausgangsverbindungen gesteuert bzw. eingestellt bzw. maßgeschneidert werden kann (neben den Reaktionsbedingungen im einzelnen).

Insbesondere lassen sich Partikelgrößen und Porositäten, insbesondere Porengrößen und/oder Porengrößenverteilungen, der erfindungsgemäß eingesetzten OFS-Materialien durch Art und/oder Menge der eingesetzten Ausgangsverbindungen und/oder durch die Reaktionsführung in weiten Bereichen einstellen. Dementsprechend ist es möglich, dass die in der erfindungsgemäßen Einheit vorhandenen porösen Polymerpartikel Mikro-, Meso- und/oder Makroporen enthalten. Die Anwesenheit von Mikro-, Meso- und/oder Makroporen kann - wie auch andere nachfolgend bestimmte Eigenschaften (z. B. Porenvolumen, Porenoberfläche, BET-Oberfläche etc.) - beispielsweise durch Stickstoffadsorptionsmessungen gemäß DIN 66131, DIN 66135 und/oder DIN 66134, insbesondere bei Temperaturen von 77 K, bestimmt werden.

Im Rahmen der vorliegenden Erfindung bezeichnet der Begriff der Mikroporen solche Poren mit Porendurchmessern von bis zu 20 Å einschließlich, wohingegen der Begriff der Mesoporen solche Poren mit Porendurchmessern im Bereich von mehr als 20 Å (d. h. > 20 Å) bis 500 Å einschließlich bezeichnet und der Begriff der Makroporen solche Poren mit Porendurchmessern von mehr als 500 Å (d. h. > 500 Å) bezeichnet, wobei diese Definitionen der Poren den Definitionen entsprechen, wie sie beispielsweise in Pure Appl. Chem. 45 (1976), Seiten 71 ff*.,* insbesondere *Seite 79,* zu finden sind:

| | |
|---|---|
| • Mikroporen: | Porendurchmesser_{Mikroporen} ≤ 20 Å |
| • Mesoporen: | 20 Å < Porendurchmesser_{Mesoporen} ≤ 500 Å |
| • Makroporen: | Porendurchmesser_{Makroporen} > 500 Å. |

Ein besonderer Vorteil der in der erfindungsgemäßen Einheit zum Einsatz kommenden, speziellen, porösen organischen Polymere bzw. Polymerpartikel auf OFS-Basis ist die Tatsache, dass sich die Porosität, insbesondere Porengröße und/oder Porengrößenverteilung und/oder Porenoberfläche, dieser porösen Materialien - ebenso wie die Partikelgröße - im Rahmen der Synthese mittels Kreuzkupplung, insbesondere Suzuki-Kupplung, gezielt einstellen lässt, insbesondere - wie zuvor beschrieben - durch Art und/oder Menge der Ausgangsverbindungen und/oder durch die Verfahrensführung im einzelnen (z. B. Verfahrensdauer, Verfahrenstemperaturen, Art der Katalyse, insbesondere der ausgewählten Katalysatoren, Durchführung Auswahl des Lösungsmittels, des Katalysators, der Katalysatorliganden etc.). So lassen sich in Abhängigkeit von den vorgenannten Modifikationsmöglichkeiten beispielsweise erfindungsgemäß einsetzbare OFS-Verbindungen mit monomodaler Verteilung der Porengröße herstellen, beispielsweise OFS-Verbindungen mit überwiegend mikroporösem Anteil oder aber OFS-Verbindungen mit überwiegend mesoporösem Anteil oder aber OFS-Verbindungen mit überwiegend makroporösem Anteil. Gleichermaßen ist es aber auch möglich, polymodale Porengrößenverteilungen (z. B. OFS mit jeweils hohem, z. B. in etwa gleichem Anteil an Mikroporen einerseits und Meso- und/oder Makroporen andererseits) zu erhalten, sofern es im Rahmen der vorliegenden Anwendung gewünscht ist.

Dementsprechend können in Abhängigkeit von den jeweils eingesetzten Ausgangsverbindungen bzw. Eduktmolekülen (d. h. Ausgangsmonomeren) und den gewählten Reaktionsbedingungen die Eigenschaften der erfindungsgemäß zur Anwendung kommenden porösen OFS-Polymere bzw. OFS-Polymerpartikel, wie beispielsweise die inneren Oberflächen (BET) und/oder Porenvolumina und/oder Porengrößen etc., in weiten Bereichen variieren bzw. kontrolliert eingestellt werden, wie nachfolgend noch ausgeführt.

Im Rahmen der erfindungsgemäßen Einheit werden also, wie zuvor beschrieben, poröse organische Polymerpartikel eingesetzt, welche durch Kreuzkupplung, insbesondere Suzuki-Kupplung, von Arylboronsäuren mit Halogenaromaten erhältlich sind.

Der Begriff der Einheit, wie er erfindungsgemäß verwendet wird, bezeichnet insbesondere eine Mehrzahl bzw. Vielzahl von räumlich, insbesondere räumlich und funktional zusammenhängenden Polymeren bzw. Polymerpartikeln. Mit anderen Worten bezeichnet der Begriff der Einheit erfindungsgemäß eine Entität oder einen Verbund von räumlich, insbesondere räumlich und funktional zusammenhängenden porösen Polymeren bzw. Polymerpartikeln. Der räumliche, insbesondere räumliche und funktionale Zusammenhang kann dabei auf verschiedenste Weise realisiert sein: Beispielsweise kann der räumliche, insbesondere räumliche und funktionale Zusammenhang dadurch hergestellt sein, dass die einzelnen Polymerpartikel der erfindungsgemäßen Einheit lose, insbesondere in loser Schüttung, vorliegen, aber von einem äußeren Gehäuse, einer äußeren Hülle, einer äußeren Behausung oder dergleichen umgeben bzw. zu der erfindungsgemäßen Einheit zusammengefasst werden; eine solche Ausführungsform eignet sich beispielsweise dann, wenn die erfindungsgemäße Einheit für Filter, Filteranwendungen oder Gasspeicheranwendungen eingesetzt werden soll. Weiterhin besteht die Möglichkeit, dass der räumliche, insbesondere räumliche und funktionale Zusammenhang dadurch hergestellt wird, dass die einzelnen Polymerpartikel der erfindungsgemäßen Einheit auf einem gemeinsamen Träger aufgebracht bzw. hieran fixiert und über diesen Träger mittelbar räumlich verbunden bzw. in Verbindung gebracht sind, wobei bei dieser Ausführungsform die Belegung des Trägers derart sein kann, dass die einzelnen Polymerpartikel einander berühren oder aber beabstandet sind bzw. nicht berühren; eine solche Ausführungsform mit Trägermaterial ist beispielsweise im Fall der Anwendung von Flächenfiltern, insbesondere textilen Flächenfiltern, oder geträgerten Katalysatorsystemen von Bedeutung. Im Allgemeinen bezeichnet also der erfindungsgemäß verwendete Begriff der Einheit einen räumlich, insbesondere räumlich und funktional, mittelbar oder unmittelbar zusammenhängenden Verbund bzw. Entität einer Vielzahl von Partikeln auf Basis von porösen organischen Polymeren der vorgenannten Art.

Wie zuvor ausgeführt, werden die organischen Polymere der erfindungsgemäßen Einheit durch Kreuzkupplung, insbesondere Suzuki-Kupplung, hergestellt, wobei im Rahmen dieser Reaktion Arylboronsäuren einerseits mit Halogenaromaten andererseits zur Reaktion gebracht werden, was letztendlich - bei Auswahl polyfunktioneller Edukte - zu polymeren Netzwerken führt.

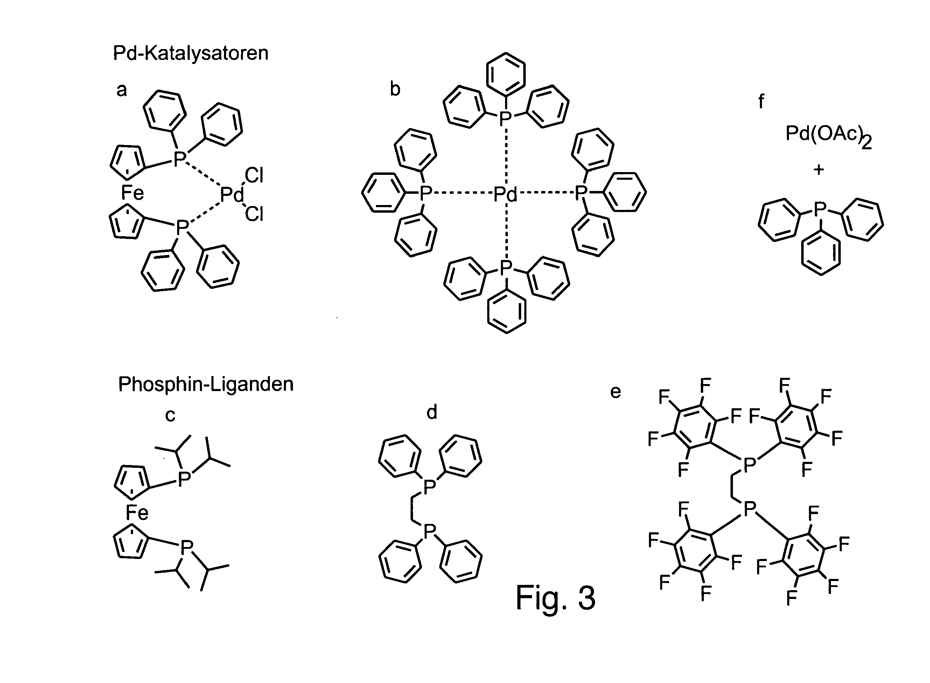

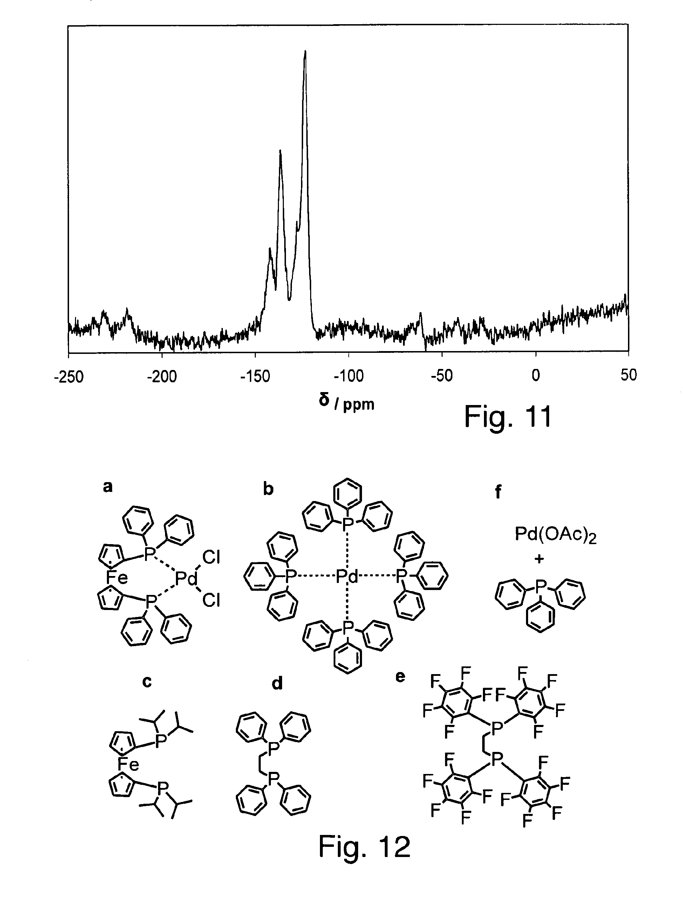

Im Allgemeinen wird die Kreuzkupplung, insbesondere Suzuki-Kupplung, unter Katalyse, vorzugsweise übergangsmetallkatalysiert, besonders bevorzugt palladiumkatalysiert (Pd-katalysiert), ganz besonders bevorzugt Pd(0)-katalysiert, durchgeführt. Dabei kann der eingesetzte Katalysator insbesondere ausgewählt sein aus der Gruppe von Edelmetallen, insbesondere Palladium, bevorzugt Pd(0), insbesondere in der Form von Palladium-Phosphin-Komplexen, bevorzugt Palladium-Phosphinligand-Komplexen. Erfindungsgemäß bevorzugt eingesetzte Katalysatoren und Liganden sind in den Fig. 3 und 12 dargestellt.

Grundsätzlich kann die erfindungsgemäß angewendete Kreuzkupplung, insbesondere Suzuki-Kupplung, als Festkörper- und/oder Feststoffreaktion oder aber bevorzugt als Reaktion in flüssiger Phase, insbesondere in Lösung oder Dispersion, durchgeführt werden. Die Durchführung der Reaktion in flüssiger Phase, insbesondere in Lösung oder Dispersion, ist erfindungsgemäß bevorzugt.

Im Allgemeinen wird die Kreuzkupplung, insbesondere Suzuki-Kupplung, in einem basische Milieu und/oder basisch katalysiert, insbesondere in Gegenwart mindestens einer Base, durchgeführt. Erfindungsgemäß geeignete Basen sind beispielsweise Carbonate, Alkoholate, Phosphate und Hydroxide von Alkali- und/oder Erdalkali.

Die Kreuzkupplung, insbesondere Suzuki-Kupplung, kann erfindungsgemäß in einem weiten Temperaturbereich durchgeführt werden, insbesondere bei Temperaturen im Bereich von -50 °C bis 250 °C, insbesondere -5 °C bis 200 °C, vorzugsweise 0 °C bis 150 °C.

Weiterhin kann die Kreuzkupplung, insbesondere Suzuki-Kupplung, in weiten Druckbereichen durchgeführt werden, insbesondere bei einem Druck im Bereich von 0,01 bis 50 bar absolut, insbesondere 0,1 bis 10 bar absolut, vorzugsweise unter Atmosphärendruck (1,013 bar absolut).

Durch die Kreuzkupplung, insbesondere Suzuki-Kupplung, speziell ausgewählter Arylboronsäuren mit speziell ausgewählten Halogenaromaten resultieren poröse organische Polymere bzw. Polymerpartikel, welche eine nichtlineare vernetzte, insbesondere zwei- und/oder dreidimensional vernetzte, vorzugsweise sternförmig und/oder tetraederförmig vernetzte, Struktur aufweisen. Dieses Netzwerk ist verantwortlich für die Porosität der auf diese Weise erhältlichen organischen Polymere bzw. Polymerpartikel. Infolge der nichtlinearen und vernetzten Struktur lassen sich für die erfindungsgemäß eingesetzten Polymere bzw. Polymerpartikel keine mittleren Molekulargewichte oder anderen Parameter, welche üblicherweise für die Charakterisierung linearer Polymere herangezogen werden, bestimmen bzw. angeben. Daher können im Fall der vorliegenden Erfindung die eingesetzten Polymere verlässlich nur über das Herstellungsverfahren charakterisiert werden.

Was die erfindungsgemäß eingesetzten porösen organischen Polymere bzw. Polymerpartikel anbelangt, so weisen diese jeweils eine Vielzahl von Biphenylstrukturen auf. Die Biphenylstruktur stellt die kleinste Struktureinheit innerhalb des Polymers dar und resultiert unmittelbar aus der Suzuki-Kupplung; es versteht sich aber von selbst, dass auf diese Weise durch entsprechende Aneinanderreihung von Phenylringen insgesamt auch Terphenyl-, Quaterphenyl-, ... Polyphenylstrukturen resultieren können. Zudem können durch den Einsatz nichtlinearer Edukte bzw. Linker nichtlineare bzw. verzweigte bzw. vernetzte Strukturen geschaffen werden.

Insbesondere weisen die organischen Polymere bzw. Polymerpartikel jeweils eine Vielzahl sich wiederholender Struktureinheiten vom Biphenyltyp auf. Die Anzahl der sich wiederholenden Struktureinheiten im polymeren Netzwerk kann in weiten Grenzen variieren: Im Allgemeinen beträgt die Anzahl der sich wiederholenden Struktureinheiten je Polymermolekül mindestens 25, insbesondere mindestens 50, vorzugsweise mindestens 75, besonders bevorzugt mindestens 100; dabei kann die Anzahl der sich wiederholenden Struktureinheiten je Polymermolekül bis zu 10.000.000, insbesondere bis zu 5.000.000, vorzugsweise bis zu 1.000.000, besonders bevorzugt bis zu 500.000, betragen. Insbesondere kann die Anzahl der sich wiederholenden Struktureinheiten des vorgenannten Typs je Polymermolekül im Bereich von 25 bis 10.000.000, insbesondere 50 bis 5.000.000, vorzugsweise 75 bis 1.000.000, besonders bevorzugt 100 bis 500.000, liegen.

Des Weiteren kann es gemäß einer besonderen Ausführungsform der vorliegenden Erfindung vorgesehen sein, dass die Kohlenstoffatome der Phenylringe der Struktureinheiten vom Biphenyltyp (d. h. die Gerüstkohlenstoffatome der Phenylringe) zumindest teilweise durch Heteroatome, insbesondere Stickstoffatome, ersetzt sind.

Gemäß einer besondere Ausführungsform der vorliegenden Erfindung weisen die in der erfindungsgemäßen Einheit eingesetzten, porösen organischen Polymere jeweils eine Vielzahl sich wiederholender Struktureinheiten vom Typ 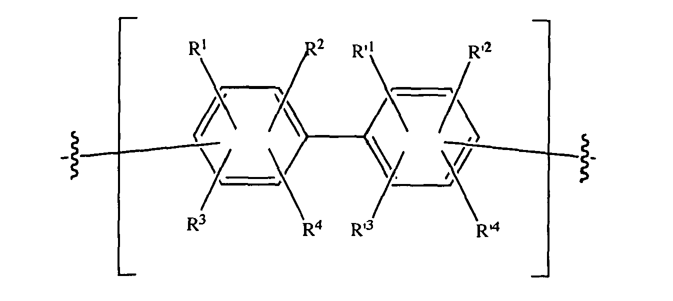 auf, wobei die Reste R¹, R², R³, R⁴, R'¹, R'², R'³ und R'⁴, jeweils unabhängig voneinander, ein Wasserstoffatom oder einen gegebenenfalls substituierten organischen Rest, insbesondere eine Alkyl-, Alkenyl-, Alkinyl-, Aryl-, Arylalkyl-, Alkylaryl-, Alkoxy- oder Amingruppe, oder ein Halogenatom, insbesondere Chlor, Brom oder Iod, bezeichnen und/oder wobei mindestens zwei der Reste R¹, R², R³ und R⁴ oder der Reste R'¹, R'², R'³ und R'⁴ einen gegebenenfalls kondensierten Ring bilden. Dabei kann die Anzahl der sich wiederholenden Struktureinheiten je Polymermolekül mindestens 25, insbesondere mindestens 50, vorzugsweise mindestens 75, besonders bevorzugt mindestens 100, betragen; die Anzahl der sich wiederholenden Struktureinheiten kann dabei je Polymermolekül bis zu 10.000.000, insbesondere bis zu 5.000.000, vorzugsweise bis zu 1.000.000, besonders bevorzugt bis zu 500.000, betragen. Insbesondere kann die Anzahl der sich wiederholenden Struktureinheiten je Polymermolekül im Bereich von 25 bis 10.000.000, insbesondere 50 bis 5.000.000, vorzugsweise 75 bis 1.000.000, besonders bevorzugt 100 bis 500.000, liegen.

Gemäß einer weiteren besonderen Ausführungsform der vorliegenden Erfindung weisen die in der erfindungsgemäßen Einheit eingesetzten, porösen organischen Polymere jeweils eine Vielzahl sich wiederholender Struktureinheiten vom Typ 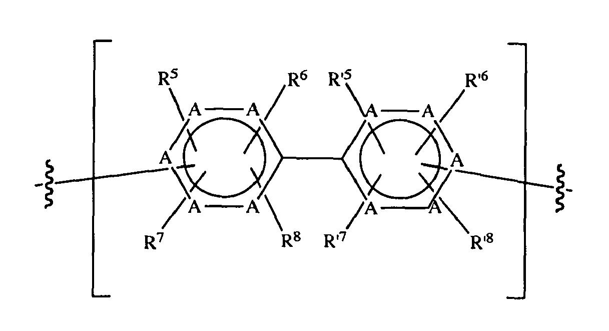 auf, wobei A, gleich oder verschieden, ein Kohlenstoffatom oder ein Stickstoffatom bezeichnen und die Reste R⁵, R⁶, R⁷, R⁸, R'⁵, R'⁶, R'⁷ und R'⁸, jeweils unabhängig voneinander, ein Wasserstoffatom oder einen gegebenenfalls substituierten organischen Rest, insbesondere eine Alkyl-, Alkenyl-, Alkinyl-, Aryl-, Arylalkyl-, Alkylaryl-, Alkoxy- oder Amingruppe, oder ein Halogenatom, insbesondere Chlor, Brom oder Iod, oder ein freies Elektronenpaar bezeichnen und/oder wobei mindestens zwei der Reste R⁵, R⁶, R⁷ und R⁸ oder der Reste R'⁵, R'⁶, R'⁷ und R'⁸ einen gegebenenfalls kondensierten Ring bilden, jedoch mit der Maßgabe, dass für den Fall, dass A ein Stickstoffatom bezeichnet, pro Stickstoffatom einer der Reste R⁵ bis R⁸ oder R'⁵ bis R'⁸ des betreffenden Phenylrings ein freies Elektronenpaar am Stickstoffatom darstellt. Dabei kann die Anzahl der sich wiederholenden Struktureinheiten je Polymermolekül mindestens 25, insbesondere mindestens 50, vorzugsweise mindestens 75, besonders bevorzugt mindestens 100, betragen; die Anzahl der sich wiederholenden Struktureinheiten kann dabei je Polymermolekül bis zu 10.000.000, insbesondere bis zu 5.000.000, vorzugsweise bis zu 1.000.000, besonders bevorzugt bis zu 500.000, betragen. Insbesondere kann die Anzahl der sich wiederholenden Struktureinheiten je Polymermolekül im Bereich von 25 bis 10.000.000, insbesondere 50 bis 5.000.000, vorzugsweise 75 bis 1.000.000, besonders bevorzugt 100 bis 500.000, liegen.

Im Allgemeinen sind die sich wiederholenden Struktureinheiten der vorgenannten Art statistisch über das Polymer und/oder das polymere Netzwerk verteilt angeordnet.

Ein besonderer Vorteil der vorliegenden Erfindung ist darin zu sehen, dass die erfindungsgemäß eingesetzten organischen Polymere bzw. Polymerpartikel thermisch beständig sind, insbesondere bis zu Temperaturen von mindestens 100°C, insbesondere mindestens 150 °C, vorzugsweise mindestens 200 °C, besonders bevorzugt mindestens 300 °C.

Darüber hinaus sind die erfindungsgemäß eingesetzten organischen Polymere bzw. Polymerpartikel gegenüber protischen Lösemitteln oder Medien beständig, insbesondere hydrolysebeständig.

Darüber hinaus sind die erfindungsgemäß eingesetzten organischen Polymere bzw. die Polymerpartikel im Allgemeinen hydrophob ausgebildet und weisen insbesondere hydrophobe Oberflächen auf, was durch die Art ihrer Herstellung begründet ist. Daher eignen sie sich insbesondere für die Speicherung und/oder Sorption, insbesondere Adsorption, unpolarer Substanzen bzw. Gase.

Wie gleichermaßen geschildert, sind die erfindungsgemäß eingesetzten organischen Polymere bzw. Polymerpartikel im Allgemeinen unpolar ausgebildet und weisen unpolare Oberflächen auf, was ihre Eignung gerade für die Speicherung bzw. Sorption, insbesondere Adsorption, unpolarer Substanzen bzw. Gase erklärt.

Wie zuvor geschildert, bilden die erfindungsgemäß eingesetzten organischen Polymere bzw. Polymerpartikel ein hydrophobes und/oder polares, poröses, insbesondere mikroporöses, polymeres Netzwerk aus.

Wie zuvor beschrieben, werden im Rahmen der erfindungsgemäß angewendeten Kreuzkupplung, insbesondere Suzuki-Kupplung, jeweils polyfunktionelle Arylboronsäuren mit Halogenaromaten zur Reaktion gebracht und die betreffenden Grundkörper miteinander verknüpft ("gekuppelt").

Im Rahmen der vorliegenden Erfindung weisen die eingesetzten Arylboronsäuren mindestens zwei Boronsäuregruppen -B(OH)₂ je Molekül, insbesondere zwei, drei und/oder vier Boronsäuregruppen je Molekül, auf; dabei können auch unterschiedliche Arylboronsäuren (z. B. mit unterschiedlicher Boronsäuregruppenzahl) in einem Reaktionsansatz mit den Halogenaromaten zur Reaktion gebracht werden. Was die Halogenaromaten anbelangt, so weisen diese im Allgemeinen mindestens zwei Halogenatome, insbesondere zwei, drei oder vier Halogenatome, insbesondere Chlor, Brom oder Iod, auf; anstelle des Halogens können - wie zuvor ausgeführt - auch andere, alternative Abgangsgruppen (z. B. Triflat) eingesetzt werden, was sich für den Fachmann von selbst versteht. Im Rahmen der vorliegenden Erfindung sollte mindestens eines der beiden Edukte (d. h. die Arylboronsäuren und/oder die Halogenaromaten), insbesondere mindestens die Arylboronsäure und/oder mindestens die Halogenaromaten, mindestens zweifach funktionalisiert sein; in diesem Zusammenhang bedeutet der Begriff der Funktionalisierung das Vorhandensein einer Boronsäuregruppe im Fall von Arylboronsäuren und das Vorhandensein eines Halogens bzw. gleichwertiger Abgangsgruppen im Falle der Halogenaromaten. Die mindestens zweifache Funktionalität ist die Voraussetzung für die Ausbildung eines polymeren Netzwerkes, da andernfalls (d. h. im Fall des Vorhandenseins nur einer Funktionalität) die Reaktion nach Abreagieren dieser einen Funktionalität abgeschlossen wäre, d. h. keine weitere Verknüpfung mehr möglich wäre.

Im Rahmen der vorliegenden Erfindung kommen also als Ausgangsmaterialien (Edukte) mindestens zweifach funktionalisierte Arylboronsäuren (d. h. Arylboronsäuren mit mindestens zwei Boronsäuregruppen) und/oder mindestens zweifach halogenierte Halogenaromaten (Aromaten mit mindestens zwei Halogenatomen) zum Einsatz, wobei es für den Fachmann selbstverständlich ist, dass anstelle von Halogen auch andere geeignete Abgangsgruppen, insbesondere Triflate etc., eingesetzt werden können.

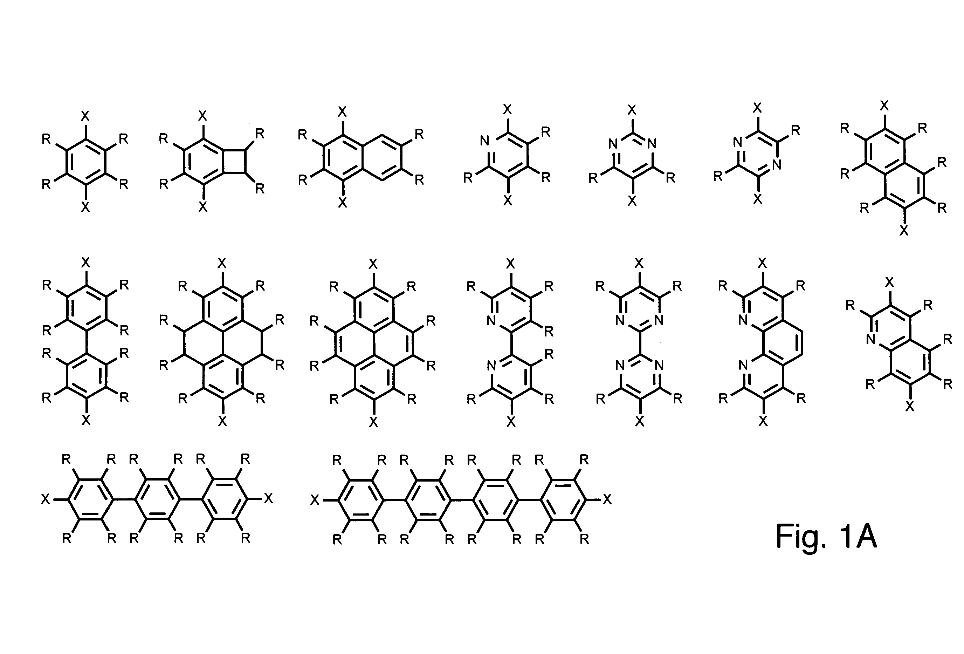

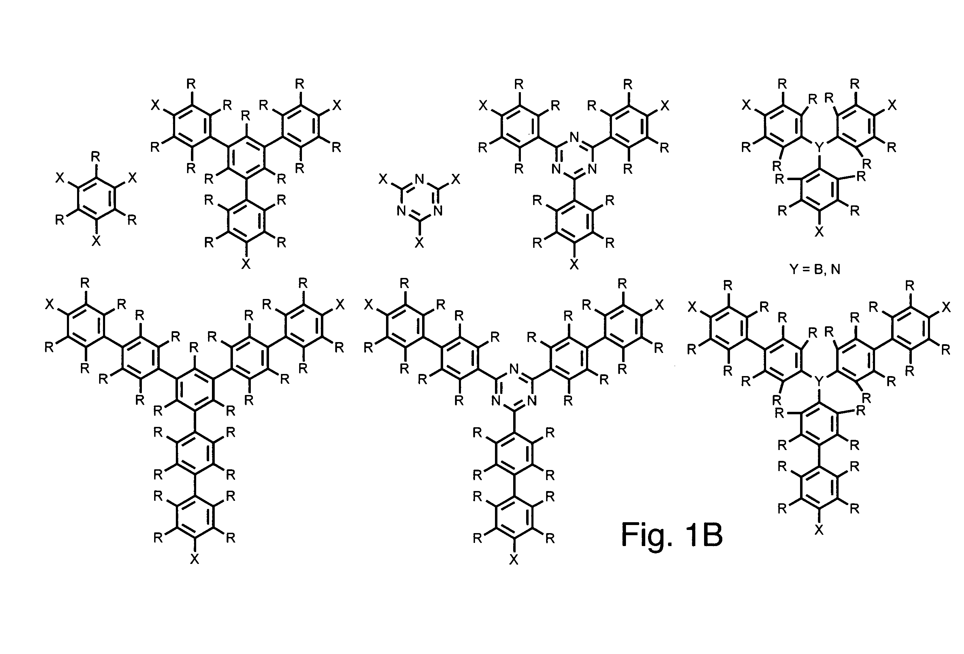

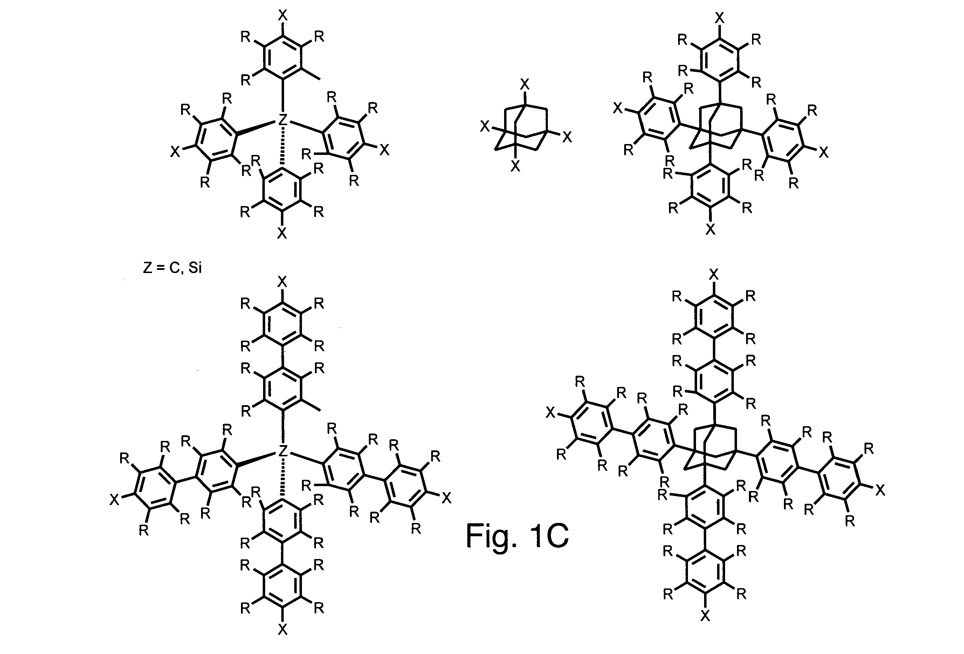

Gemäß einer besondere Ausführungsform der vorliegenden Erfindung sind die erfindungsgemäß für die Kreuzkupplung, insbesondere Suzuki-Kupplung, zum Einsatz kommenden Edukte, d. h. die Arylboronsäuren und die Halogenaromaten, ausgewählt aus der Gruppe der Verbindungen gemäß den Figuren 1A, 1B und 1C und ihren Kombinationen oder Mischungen, wobei in den gemäß den Figuren 1A, 1B und 1C dargestellten Formeln
- X eine funktionelle Gruppe für die Kupplungsreaktion, und zwar für den Fall einer Arylboronsäure eine Boronsäuregruppen -B(OH)₂ und für den Fall eines Halogenaromaten ein Halogen, insbesondere Chlor, Brom oder Iod bzw. eine gleichwertige Abgangsgruppe (z. B. Triflat), bezeichnet;
- R, unabhängig voneinander, ein Wasserstoffatom oder einen gegebenenfalls substituierten organischen Rest, insbesondere eine Alkyl-, Alkenyl-, Alkinyl-, Aryl-, Arylalkyl-, Alkylaryl-, Alkoxy- oder Amingruppe, bezeichnet;
- Y ein Boratom oder ein Stickstoffatom bezeichnet;
- Z ein Kohlenstoffatom oder ein Siliziumatom bezeichnet.

Die Figuren gemäß Fig. 1A bis 1C zeigen somit erfindungsgemäß einsetzbare Ausgangsverbindungen bzw. Eduktmoleküle ("Linker") für die Herstellung der in der erfindungsgemäßen Einheit einsetzbaren, porösen organischen Polymere, wobei in den in Fig. 1A bis 1C dargestellten Formeln: (i) der Rest "X" eine funktionelle Gruppe für die Kupplungsreaktion, und zwar für den Fall einer Arylboronsäure eine Boronsäuregruppen -B(OH)₂ und für den Fall eines Halogenaromaten ein Halogen, insbesondere Chlor, Brom oder Iod, oder eine vergleichbare Abgangsgruppe (z. B. Triflat) bezeichnet; (ii) der Rest "R", unabhängig voneinander, ein Wasserstoffatom oder einen gegebenenfalls substituierten organischen Rest, insbesondere eine Alkyl-, Alkenyl-, Alkinyl-, Aryl-, Arylalkyl-, Alkylaryl-, Alkoxy- oder Amingruppe, bezeichnet; (iii) "Y" ein Boratom oder ein Stickstoffatom bezeichnet; (iv) "Z" ein Kohlenstoffatom oder ein Siliziumatom bezeichnet. Während Fig. 1A bifunktionelle Linkermoleküle zeigt, zeigen Fig. 1B bzw. 1C trifunktionelle bzw. tetrafunktionelle Linkermoleküle.

Gemäß einer besonderen Ausführungsform kann die erfindungsgemäße Einheit bzw. können die Polymerpartikel in loser Schüttung vorliegen. In diesem Fall können die Polymerpartikel insbesondere von einer räumlichen Begrenzung, bevorzugt einem Gehäuse, einer Behausung, einer Hülle oder Hüllstruktur, einem Rahmen oder dergleichen, umgeben sein. Eine solche Ausführungsform eignet sich beispielsweise für Filteranwendungen (z. B. so genannte Schüttfilter) oder aber für Gasspeicher.

Gemäß einer weiteren besonderen, aber alternativen Ausführungsform können die Polymerpartikel zu einem Formkörper zusammengeführt und/oder verarbeitet sein. Dies kann beispielsweise durch Verpressen der einzelnen Polymerpartikel erfolgen oder aber auch durch den Einsatz eines Bindemittels, wie z. B. eines Klebstoffs.

Gemäß einer wiederum weiteren besonderen, ebenfalls alternativen Ausführungsform können die Polymerpartikel der erfindungsgemäßen Einheit auf mindestens einem Träger bzw. Trägermaterial aufgebracht sein, insbesondere hieran fixiert sein. Je nach Anwendungszweck können geeignete Träger bzw. Trägermaterialien beispielsweise ausgewählt sein aus der Gruppe von textilen Materialien (z. B. textilen Flächengebilden, wie Geweben, Gewirken etc., oder Schaumstoffen), Trägermaterialien für Katalysatoren (z. B. keramischen Trägern oder Kohlenstoffträgern etc.), Kunststoffen bzw. kunststoffbasierten Materialien, keramischen Materialien, metallischen Materialien oder deren Kombinationen. Bei dieser Ausführungsform kann es beispielsweise vorgesehen sein, dass der Träger, insbesondere im Fall eines textilen Trägermaterials, gasdurchlässig, insbesondere luftdurchlässig, ausgebildet sein kann; dabei kann der Träger insbesondere eine Gasdurchlässigkeit, insbesondere Luftdurchlässigkeit, von mindestens 101·m⁻²·s⁻¹, insbesondere mindestens 301·m⁻²·s⁻¹, vorzugsweise mindestens 501·m⁻²·s⁻¹, besonders bevorzugt mindestens 100 1·m⁻²·s⁻¹, ganz besonders bevorzugt mindestens 500 1·m⁻²·s⁻¹, und/oder bis zu 10.000 1·m⁻²·s⁻¹, insbesondere bis zu 20.000 1·m⁻²·s⁻¹, bei einem Strömungswiderstand von 127 Pa aufweisen. Gemäß dieser Ausführungsform kann der Träger eine dreidimensionale Struktur aufweisen (wobei der Träger beispielsweise als vorzugsweise offenporiger Schaumstoff, besonders bevorzugt als Polyurethanschaumstoff, ausgebildet sein kann) oder aber alternativ eine zweidimensionale und/oder flächige Struktur aufweisen (wobei der Träger in diesem Fall als vorzugsweise textiles Flächengebilde ausgebildet sein kann, insbesondere als ein Gewebe, Gewirke, Gestricke, Gelege oder Textilverbundstoff, insbesondere Vlies bzw. Nonwoven, und/oder wobei der Träger in diesem Fall ein Flächengewicht von 5 bis 1.000 g/m², insbesondere 10 bis 500 g/m², bevorzugt 25 bis 450 g/m², aufweisen kann).

Was die porösen organischen Polymerpartikel als solche anbelangt, so können diese in Pulverform oder aber bevorzugt in Kornform, insbesondere Kugelform, oder in Form von Agglomeraten vor.

Dabei kann die Teilchengröße der Polymerpartikel oder deren Agglomeraten in weiten Bereichen variieren. Üblicherweise weisen die Polymerpartikel oder deren Agglomerate Teilchengrößen im Bereich von 0,0001 µm bis 10 mm, insbesondere 0,001 µm bis 5 mm, vorzugsweise 0,005 µm bis 3 mm, besonders bevorzugt 0,01 µm bis 2 mm, ganz besonders bevorzugt 0,1 µm bis 1,5 mm, auf.

Die mittleren Teilchengrößen der erfindungsgemäß eingesetzten Polymerartikel bzw. deren Agglomerate, bestimmt als so genannter D50-Wert, liegen üblicherweise im Bereich von 0,001 µm bis 8 mm, insbesondere 0,005 µm bis 2 mm, vorzugsweise 0,01 µm bis 1 mm.

Die Bestimmung der Teilchengrößen und mittleren Teilchengrößen kann mit dem Fachmann an sich bekannten Methoden erfolgen. Für die Teilchengrößenbestimmung eignet sich insbesondere ASTM D2862-97/04.

Die Parameterangaben betreffend die Charakterisierung der Porosität und der damit in Zusammenhang stehenden Parameter, wie insbesondere Gesamtporosität, innere Oberfläche, Porengröße, Porengrößeverteilung, Adsorptionsvolumen, adsorbiertes Volumen, Gesamtporenvolumen, Mikroporenvolumenanteil etc., ergeben sich jeweils aus der Stickstoffisotherme des betreffenden bzw. vermessenen OFS-Materials, insbesondere der Stickstoffisotherme bei tiefen Temperaturen (üblicherweise bei T = 77 Kelvin, sofern nachfolgend nichts Gegenteiliges angegeben ist).

Wie zuvor beschrieben, weist das erfindungsgemäß eingesetzte OFS-Material innere Hohlräume, insbesondere Poren, auf, d. h. die erfindungsgemäß eingesetzten organischen Polymere (OFS) sind porös ausgebildet. Hieraus resultieren relativ hohe innere Oberflächen und Gesamtporenvolumina.

Gleichermaßen kann auch das Gesamtporenvolumen der erfindungsgemäß eingesetzten Polymerpartikel in weiten Bereichen variieren. Insbesondere weisen die erfindungsgemäß eingesetzten Polymerpartikel ein Gesamtporenvolumen von mindestens 0,05 cm³/g, insbesondere mindestens 0,1 cm³/g, vorzugsweise mindestens 0,2 cm³/g, auf; weiterhin weisen die erfindungsgemäß eingesetzten Polymerpartikel ein Gesamtporenvolumen im Allgemeinen von bis zu 2,0 cm³/g, insbesondere bis zu 3,0 cm³/g, vorzugsweise bis zu 4,0 cm³/g, besonders bevorzugt bis zu 5,0 cm³/g, auf. Üblicherweise weisen die erfindungsgemäß eingesetzten Polymerpartikel ein Gesamtporenvolumen im Bereich von 0,05 cm³/g bis 5,0 cm³/g, insbesondere 0,1 cm³/g bis 4,0 cm³/g, vorzugsweise 0,2 cm³/g bis 3,0 cm³/g, auf. Die vorgenannten Gesamtporenvolumina beziehen sich insbesondere auf solche Werte, welche nach der so genannten Gurvich-Methode bestimmt worden sind (p/p₀= 0,995). Was die Bestimmung des Gesamtporenvolumens nach Gurvich anbelangt, so handelt es sich um eine dem Fachmann auf diesem Gebiet an sich bekannte Mess-/Bestimmungsmethode; zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff.

Gemäß einer besonderen Ausführungsform sind mindestens 20 %, insbesondere mindestens 30 %, vorzugsweise mindestens 40 %, besonders bevorzugt mindestens 50 %, des Gesamtporenvolumens der Polymerpartikel durch Mikroporen mit Porendurchmessern von ≤ 20 Å gebildet. Im Allgemeinen sind 20 % bis 99 %, insbesondere 30 % bis 95 %, vorzugsweise 40 % bis 90 %, besonders bevorzugt 50 % bis 80 %, des Gesamtporenvolumens der Polymerpartikel durch Mikroporenporen mit Porendurchmessern von ≤ 20 Å gebildet. Insbesondere liegt das durch Mikroporen mit Porendurchmessern von ≤ 20 Å gebildete Mikroporenvolumen der Polymerpartikel im Bereich von 0,01 bis 1,5 cm³/g, insbesondere 0,02 bis 1,2 cm³/g, bevorzugt 0,05 bis 1 cm³/g. Die vorgenannten Angaben des Mikroporenvolumens werden insbesondere nach der Bestimmungsmethode gemäß Carbon Black bestimmt.

Die Bestimmungsmethode nach Carbon Black ist dem Fachmann an sich bekannt, so dass es diesbezüglich keiner weitergehenden Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., Oktober 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff.

Was den mittleren Porendurchmesser der erfindungsgemäß eingesetzten Polymerpartikel anbelangt, so kann auch dieser in weiten Bereichen variieren. Üblicherweise beträgt der mittlere Porendurchmesser der Polymerpartikel höchstens 100 Å, insbesondere höchstens 50 Å, bevorzugt höchstens 30 Å. Im Allgemeinen liegt der mittlere Porendurchmesser der Polymerpartikel im Bereich von 1 bis 100 Å, insbesondere 2 bis 75 Å, vorzugsweise 5 bis 50 Å, besonders bevorzugt 10 bis 30 Å.

Des weiteren kann auch die innere Oberfläche (BET-Oberfläche) der erfindungsgemäß eingesetzten Polymerpartikel in weiten Bereichen variieren. Im Allgemeinen beträgt die BET-Oberfläche der Polymerpartikel mindestens 100 m²/g, insbesondere mindestens 200 m²/g, vorzugsweise mindestens 250 m²/g, bevorzugt mindestens 300 m²/g, besonders bevorzugt mindestens 400 m²/g. Üblicherweise beträgt die BET-Oberfläche der Polymerpartikel bis zu 1.800 m²/g, insbesondere bis zu 2.000 m²/g, vorzugsweise bis zu 2.500 m²/g, besonders bevorzugt bis zu 3.000 m²/g, ganz besonders bevorzugt bis zu 6.000 m²/g, noch mehr bevorzugt bis zu 7.000 m²/g und mehr. Insbesondere liegt die BET-Oberfläche der Polymerpartikel im Bereich von 100 m²/g bis 7.000 m²/g, insbesondere 150 bis 6.000 m²/g, vorzugsweise 200 bis 3.000 m²/g, besonders bevorzugt 225 bis 2.500 m²/g, ganz besonders bevorzugt 250 bis 2.000 m²/g, noch mehr bevorzugt 275 bis 1.800 m²/g.

Die Bestimmung der spezifischen Oberfläche gemäß BET ist dem Fachmann grundsätzlich als solche wohlbekannt, so dass es diesbezüglich keiner weitergehenden Einzelheiten bedarf. Alle BET-Oberflächenangaben beziehen sich auf die Bestimmung gemäß ASTM D6556-04. Im Rahmen der vorliegenden Erfindung wird im übrigen zur Bestimmung der BET-Oberfläche die dem Fachmann hinlänglich bekannte so genannte MultiPoint-BET-Bestimmungsmethode (MP-BET), insbesondere in einem Partialdruckbereich p/p₀ von 0,05 bis 0,1, angewendet.

In Bezug auf weitergehende Einzelheiten zur Bestimmung der BET-Oberfläche bzw. zu der BET-Methode kann im übrigen auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968) verwiesen werden.

Auch das gewichts- und volumenbezogene Volumen V_{ads} (N₂) der erfindungsgemäß eingesetzten organischen Polymere bei unterschiedlichen Partialdrücken p/p₀ kann in weiten Bereichen variieren:
So kann das gewichtsbezogene adsorbierte N₂-Volumen V_{ads (gew)} der erfindungsgemäß eingesetzten organischen Polymere, bestimmt bei einem Partialdruck p/p₀ von 0,25, mindestens 50 cm³/g, insbesondere mindestens 100 cm³/g, bevorzugt mindestens 150 cm³/g, besonders bevorzugt mindestens 200 cm³/g, und liegt insbesondere im Bereich von 50 bis 800 cm³/g, vorzugsweise 100 bis 750 cm³/g, besonders bevorzugt 150 bis 700 cm³/g.

Im allgemeinen beträgt das volumenbezogene adsorbierte N₂-Volumen V_{ads (vol.)} der erfindungsgemäß eingesetzten organischen Polymere, bestimmt bei einem Partialdruck p/p₀ von 0,25, mindestens 50 cm³/cm³, insbesondere mindestens 100 cm³/cm³, und liegt insbesondere im Bereich von 50 bis 400 cm³/cm³, vorzugsweise 75 bis 375 cm³/cm³, besonders bevorzugt 100 bis 350 cm³/cm³.

Im allgemeinen beträgt das gewichtsbezogene adsorbierte N₂-Volumen V_{ads (gew.)} der erfindungsgemäß eingesetzten organischen Polymere, bestimmt bei einem Partialdruck p/p₀ von 0,995, mindestens 75 cm³/g, insbesondere mindestens 150 cm³/g, bevorzugt mindestens 200 cm³/g, besonders bevorzugt mindestens 225 cm³/g, und liegt insbesondere im Bereich von 75 bis 900cm³/g, vorzugsweise 150 bis 800 cm³/g, besonders bevorzugt 175 bis 750 cm³/g

Im allgemeinen beträgt das volumenbezogene adsorbierte N₂-Volumen V_{ads (vol.)} der erfindungsgemäß eingesetzten organischen Polymere, bestimmt bei einem Partialdruck p/p₀ von 0,995, mindestens 75 cm³/cm³, insbesondere mindestens 125 cm³/cm³, und liegt insbesondere im Bereich von 75 bis 500 cm³/cm³, vorzugsweise 100 bis 475 cm³/cm³, besonders bevorzugt 125 bis 400 cm³/cm³.

Gemäß einer besonderen Ausführungsform der vorliegenden Erfindung können die organischen Polymere bzw. die organischen Polymerpartikel nach erfolgter Kreuzkupplung, insbesondere Suzuki-Kupplung, modifiziert werden, insbesondere mittels Nachvernetzung der Polymere und/oder mittels Funktionalisierung, bevorzugt an den Aromaten und/oder an gegebenenfalls noch vorhandenen, insbesondere endständigen Halogen- und/oder Boronsäuregruppen. Auf diese Weise lassen sich verbesserte bzw. maßgeschneiderte Anwendungseigenschaften erhalten. Beispielsweise können die organischen Polymere bzw. die organischen Polymerpartikel nach erfolgter Kreuzkupplung, insbesondere Suzuki-Kupplung, zu diesem Zweck einer Nachvernetzung bzw. einem so genannten Hypercrosslinking unterworfen werden. Auf diese Weise lassen sich beispielsweise die spezifischen Oberflächen der Polymere signifikant erhöhen, wobei dieser Vorgang auch wiederholt durchgeführt werden kann. Gleichermaßen ist es aber auch möglich, die organischen Polymere bzw. die organischen Polymerpartikel nach erfolgter Kreuzkupplung, insbesondere Suzuki-Kupplung, einer Funktionalisierung zu unterziehen, z. B. an den Aromaten und/oder Halogen- und/oder Boronsäuregruppen. Es können aber auch zwei oder mehrere der vorgenannten Modifizierungen der Polymere durchgeführt werden. Insgesamt werden auf diese Weise modifizierte, insbesondere angepasste und/oder maßgeschneiderte Anwendungseigenschaften der erfindungsgemäß eingesetzten Polymere erhalten.

Weiterhin weisen die erfindungsgemäß eingesetzten Polymerpartikel gute Gasspeicher- und/oder Gasladungskapazitäten auf, insbesondere gegenüber Wasserstoff, Kohlenwasserstoffen, wie z. B. Methan, und dergleichen. Insbesondere weisen die erfindungsgemäß eingesetzten Polymerpartikel bei einem Druck von 1 bar und einer Temperatur von 77 K eine Wasserstoffspeicher- und/oder Wasserstoffbeladungskapazität von 0,1 bis 50 Gew.-%, insbesondere 0,2 bis 30 Gew.-%, vorzugsweise 0,5 bis 25 Gew.-%, bezogen auf die Polymerpartikel, auf.

Gemäß einer besonderen Ausführungsform der vorliegenden Erfindung können in der Einheit nach der vorliegenden Erfindung die erfindungsgemäß eingesetzten, porösen, organischen Polymerpartikel zusammen mit einem weiteren, aber hiervon verschiedenen partikulären porösen Material, insbesondere Adsorbens, eingesetzt bzw. hiermit kombiniert werden. Bei diesem weiteren Material kann es sich insbesondere um ein Material aus der Gruppe von Aktivkohle, insbesondere kornförmiger Aktivkohle, vorzugsweise kugelförmiger Aktivkohle; Zeolithen; porösen Metalloxid- und/oder Metallpartikeln; Ionenaustauscherharzen; anorganischen Oxiden, insbesondere Siliziumdioxiden, Silicagelen und/oder Aluminiumoxiden; porösen organisch-anorganischen Hybridpolymeren; metallorganischen Gerüstmaterialien, insbesondere MOFs (*Metall Organic Frameworks);* mineralischen Granulaten; Klathraten; sowie deren Mischungen und/oder Kombinationen, handeln. Besonders bevorzugt kann das weitere Material Aktivkohle, insbesondere in Kornform, vorzugsweise in Kugelform, besonders bevorzugt mit Teilchendurchmessern im Bereich von 0,0001 bis 5 mm, insbesondere 0,001 bis 2 mm, sein. Auf diese Weise kann die Leistungsfähigkeit der erfindungsgemäßen Einheit noch weiter gesteigert werden, da auf diese Weise Materialien mit unterschiedlichen Eigenschaften - erfindungsgemäß eingesetzte organische Polymerpartikel einerseits und Partikel des weiteren Materials andererseits - in einer einzigen Einheit miteinander vereint werden.

Im Rahmen der vorliegenden Erfindung wird also eine neue Klasse poröser, insbesondere mikroporöser, rein organischer Netzwerkverbindungen auf OFS-Basis bereitgestellt, welche durch Kreuzkupplung, insbesondere Suzuki-Kupplung, von Arylboronsäuren mit Halogenaromaten synthetisiert werden und große spezifische BET-Oberflächen aufweisen und zudem eine stark hydrophobe Oberfläche besitzen, was sie insbesondere zur Adsorption bevorzugt unpolarer Stoffe interessant macht. Diese amorphen, porösen polymeren Materialien bzw. Partikel sind thermisch bis zu Temperaturen von etwa 300 °C und sogar mehr stabil und zeigen keine Zersetzungserscheinungen in wässriger Umgebung, was eine leichte Handhabung ermöglicht. Die OFS-Materialien sind synthetisch einfach zugänglich und bieten durch ihre chemische und thermische Stabilität vielseitige Anwendungsmöglichkeiten, beispielsweise bei adsorptiven Trennprozessen (z. B. in der Filtration, Gasreinigung, Gasspeicherung etc.).

Die zuvor beschriebene Kreuzkupplung, insbesondere Suzuki-Kupplung, führt zur Verknüpfung von funktionellen, insbesondere polyfunktionellen organischen Linkermolekülen bzw. Eduktmolekülen, so dass kovalente organische Netzwerke erhalten werden. Die Kreuzkupplung, insbesondere Suzuki-Kupplung, wird in der Literatur bislang nur zur Synthese von relativ kleinen Molekülen verwendet, nicht aber zum Aufbau von porösen Polymernetzwerken. Die durch die Kreuzkupplung, insbesondere Suzuki-Kupplung, erreichbare polymere Vernetzung ist gerade für den Aufbau neuer Linkermoleküle, insbesondere für neuartige, modular aufgebaute poröse Polymere, von Bedeutung. Die Reaktion verläuft metallkatalysiert, insbesondere palladiumkatalysiert, und bevorzugt im Basischen (z. B. in Gegenwart von Carbonaten, Hydroxiden, Phosphaten, Alkoholaten etc.).

Im Rahmen der vorliegenden Erfindung wird die Kreuzkupplung, insbesondere Suzuki-Kupplung, von polyfunktionellen (d. h. mindestens zwei Boronsäuregruppen aufweisenden) Arylboronsäuren mit polyfunktionellen (d. h. mindestens zwei Halogenatome aufweisenden) Halogenaromaten erstmals dazu verwendet, um eine neue Klasse poröser, insbesondere mikroporöser, rein organischer polymerer Netzwerksverbindungen, nämlich die zuvor charakterisierten OFS-Materialien, zu synthetisieren. Diese Verbindungen weisen große spezifische BET-Oberflächen auf und besitzen eine hydrophobe Oberfläche, was sie insbesondere für die Adsorption unpolarer Stoffe interessant macht. Darüber hinaus sind diese amorphen polymeren Materialien thermisch sehr stabil und zeigen auch in protischer, insbesondere wässriger Umgebung keine Zersetzungserscheinungen, was eine leichte Handhabung ermöglicht. Die OFS-Materialien sind synthetisch einfach zugänglich und bieten durch ihre chemische und thermische Stabilität vielseitige Anwendungsmöglichkeiten, insbesondere bei adsorptiven Trennprozessen, wie zuvor bereits ausgeführt.

Weitere Vorteile, Merkmale, Eigenschaften und Aspekte der vorliegenden Erfindung ergeben sich auch aus den beigefügten Figurendarstellungen. Es zeigt:
- Fig. 1A bis 1C: erfindungsgemäß einsetzbare Ausgangsverbindungen bzw. Eduktmoleküle ("Linker") für die Herstellung der in der erfindungsgemäßen Einheit einsetzbaren, porösen organischen Polymere, wobei in den in Fig. 1A bis 1C dargestellten Formeln: (i) der Rest "X" eine funktionelle Gruppe für die Kupplungsreaktion, und zwar für den Fall einer Arylboronsäure eine Boronsäuregruppen -B(OH)₂ und für den Fall eines Halogenaromaten ein Halogen, insbesondere Chlor, Brom oder Iod, bzw. eine vergleichbare Abgangsgruppe (z. B. Triflat) bezeichnet; (ii) der Rest "R", unabhängig voneinander, ein Wasserstoffatom oder einen gegebenenfalls substituierten organischen Rest, insbesondere eine Alkyl-, Alkenyl-, Alkinyl-, Aryl-, Arylalkyl-, Alkylaryl-, Alkoxyoder Amingruppe, bezeichnet; (iii) "Y" ein Boratom oder ein Stickstoffatom bezeichnet; (iv) "Z" ein Kohlenstoffatom oder ein Siliziumatom bezeichnet; wobei Fig. 1A bifunktionelle Linkermoleküle zeigt, während Fig. 1B bzw. 1C trifunktionelle bzw. tetrafunktionelle Linkermoleküle zeigen;
- Fig. 2A bis 2C: schematisch den Reaktionsablauf für die Herstellung der in den Ausführungsbeispielen näher charakterisierten OFSMaterialien OFS-1 und OFS-2 (vgl. Fig. 2A), OFS-3 (vgl. Fig. 2B) sowie OFS-4 (vgl. Fig. 2B), wobei dort das Symbol "*" jeweils die Wiederholungseinheiten andeutet;
- Fig. 3: erfindungsgemäß einsetzbare palladiumbasierte Katalysatoren (Fig. 3 a, b, f) und in diesem Zusammenhang einsetzbare Phosphinliganden (Fig. 3 c, d, e) zur Herstellung der OFSbasierten Polymere;
- Fig. 4: die N₂-Physisorption der in den Ausführungsbeispielen näher charakterisierten OFS-Materialien OFS-1 (Raute), OFS2 (Quadrat), OFS-3 (Dreieck) und OFS-4 (Kreis) bei 77 K, wobei volle Symbole die Adsorption und leere Symbole die Desorption betreffen und die Innengrafik (Inset) die Vergrößerung OFS-4 betrifft;
- Fig. 5: die H₂-Physisorption des in den Ausführungsbeispielen näher charakterisierten OFS-Materials OFS-1 bei 77 K;
- Fig. 6: die H₂O-Physisorption des in den Ausführungsbeispielen näher charakterisierten OFS-Materials OFS-1 (Raute) bei 298 K, wobei volle Symbole die Adsorption und leere Symbole die Desorption betreffen;
- Fig. 7: die Butanphysisorption: Kinetik und Isothermen (Innengrafik bzw. Inset) bei 303 K der in den Ausführungsbeispielen näher charakterisierten OFS-Materialien OFS-1 (Raute, ——) und OFS-2 (Quadrat) im Vergleich zu Sorbonorit (Dreieck, .......) und Cu₃(BTC)₂ (Kreis, ------), wobei volle Symbole die Adsorption und leere Symbole die Desorption betreffen;
- Fig. 8: die mittels DTA/TG (Differenzialthermoanalyse/Thermogravimetrie) erhaltenen Kurven für das in den Ausführungsbeispielen näher charakterisierte OFS-Material OFS-1 an Luft;
- Fig. 9: REM-Aufnahmen der in den Ausführungsbeispielen näher charakterisierten OFS-Materialien OFS-1 (oben) und OFS-2 (unten) bei 500- und 20.000-facher Vergrößerung (links und rechts);
- Fig. 10: das FT-IR-Spektrum der in den Ausführungsbeispielen näher charakterisierten OFS-Materialien OFS-1 (oben) und OFS-2 (unten);
- Fig. 11: das ¹³C-CP-MAS-NMR -Spektrum des in den Ausführungsbeispielen näher charakterisierten OFS-Materials OFS-1, wobei das Symbol "*" so genannte *Spinning Sidebands* kennzeichnet;
- Fig. 12: erfindungsgemäß einsetzbare palladiumbasierte Katalysatoren (Fig. 3 a, b, f) und in diesem Zusammenhang einsetzbare Phosphinliganden (Fig. 3 c, d, e) zur Herstellung der OFSbasierten Polymere;

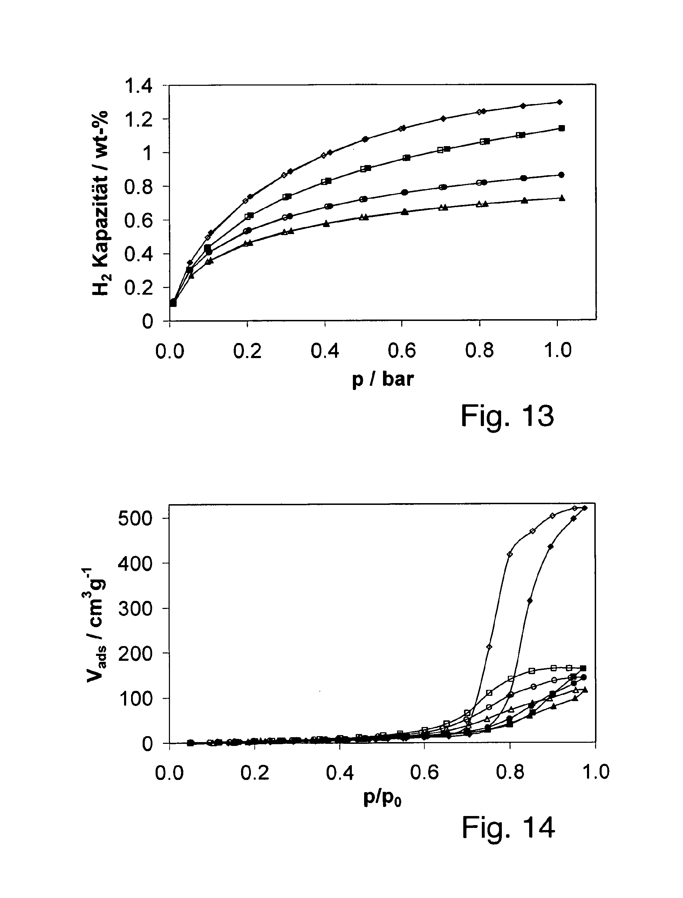

- Fig. 13: die H₂-Physisorptionsisothermen von OFS-1 (Raute), OFS-2 (Quadrat), OFS-3 (Dreieck) und OFS-4 (Kreis) bei 77 K, wobei volle Symbole die Adsorption und leere Symbole die Desorption betreffen;
- Fig. 14: die H₂O-Physisorptionsisothermen von OFS-1 (Raute), OFS-2 (Quadrat), OFS-3 (Dreieck) und OFS-4 (Kreis) bei 298 K, wobei volle Symbole die Adsorption und leere Symbole die Desorption betreffen;

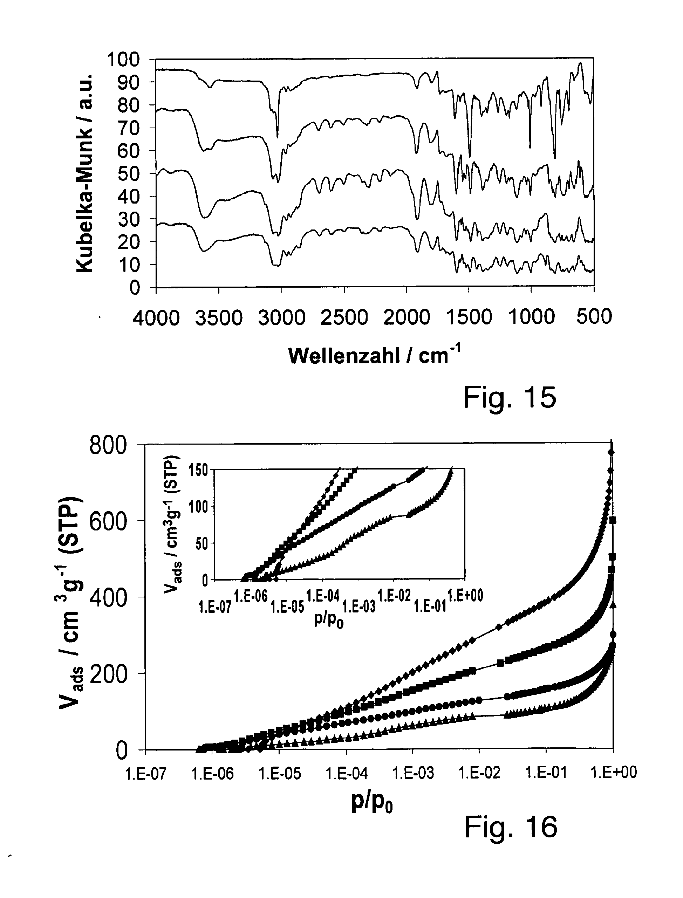

- Fig. 15: die FT-IR-Spektren von OFS-1 (oben) bis OFS-4 (unten);
- Fig. 16: die Niederdruckstickstoffadsorptionsisothermen von OFS-1 (Raute), OFS-2 (Quadrat), OFS-3 (Dreieck) und OFS-4 (Kreis);

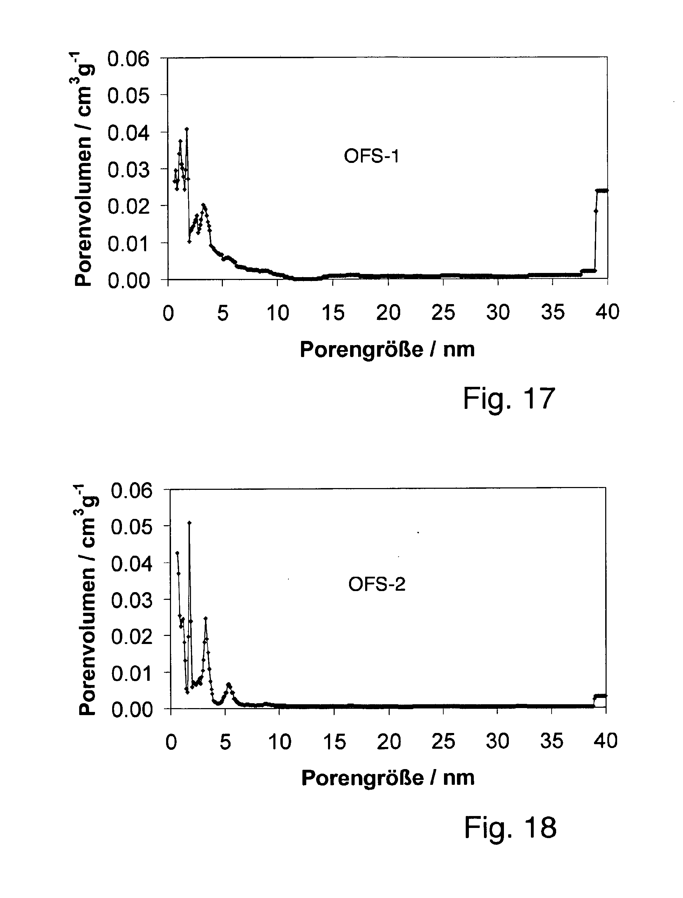

- Fig. 17: die NLDFT-Porengrößenverteilung von OFS-1 unter Verwendung von Stickstoff bei 77 K;
- Fig. 18: die NLDFT-Porengrößenverteilung von OFS-2 unter Verwendung von Stickstoff bei 77 K;

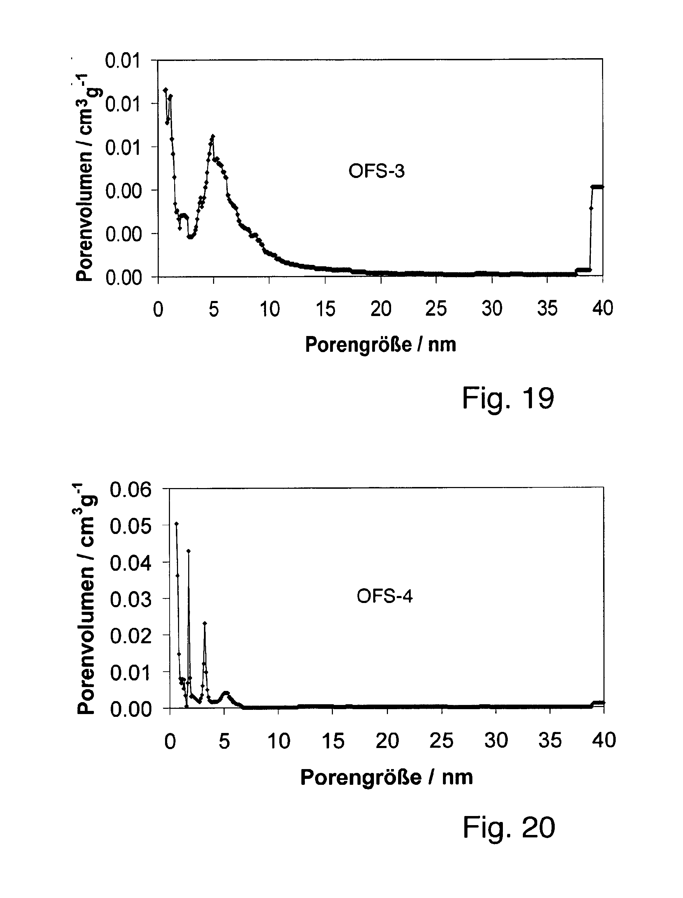

- Fig. 19: die NLDFT-Porengrößenverteilung von OFS-3 unter Verwendung von Stickstoff bei 77 K;
- Fig. 20: die NLDFT-Porengrößenverteilung von OFS-4 unter Verwendung von Stickstoff bei 77 K.

Weiterer Gegenstand der vorliegenden Erfindung - gemäß einem **weiteren** Aspekt der vorliegenden Erfindung - ist die erfindungsgemäße Verwendung der Einheit nach der vorliegenden Erfindung, wie sie zuvor beschrieben wurde, für die Filtration, für die Gasreinigung, für die Katalyse, für die Gasspeicherung oder aber für die Sorption, insbesondere Adsorption, vorzugsweise von Gasen.

In diesem Zusammenhang kann beispielsweise die erfindungsgemäße Einheit für die Filtration fluider oder gasförmiger Medien, beispielsweise zu Zwecken der Entfernung von Schad-, Geruchs- oder Giftstoffen, eingesetzt werden. Weiterhin besteht die Möglichkeit, die erfindungsgemäße Einheit für die Gasreinigung, insbesondere für die Reinigung von Luftströmen, einzusetzen. Aufgrund der Porosität der erfindungsgemäß eingesetzten Polymerpartikel ist die erfindungsgemäße Einheit auch für die Katalyse, insbesondere die heterogene Katalyse, geeignet, beispielsweise als Trägermaterial für Katalysatoren, insbesondere geträgerte Katalysatorsysteme. Weiterhin kann die erfindungsgemäße Einheit aufgrund der Porosität der erfindungsgemäß eingesetzten Polymerpartikel auch für die Gasspeicherung, beispielsweise für die Speicherung von Wasserstoff, Kohlenwasserstoffen, wie z. B. Methan, oder anderen Gasen, wie z. B. Stickstoff etc., eingesetzt werden. Weiterhin kann nach diesem erfindungsgemäßen Aspekt die erfindungsgemäße Einheit auch für die Sorption, insbesondere Adsorption, vorzugsweise von Gasen, eingesetzt werden (z. B. für die adsorptive Trennung oder Abtrennung von Gasen oder Gasgemischen).

In Bezug auf weitergehende Einzelheiten zu diesem Erfindungsaspekt kann auf die vorstehenden Ausführungen zu der erfindungsgemäßen Einheit verwiesen werden, welche entsprechend auch in Bezug auf diesen Erfindungsaspekt gelten.

Weiterer Gegenstand der vorliegenden Erfindung - gemäß wiederum einem **weiteren** Aspekt der vorliegenden Erfindung - ist die Verwendung der zuvor beschriebenen erfindungsgemäßen Einheit in Filtern und Filtermaterialien, insbesondere textilen Filtern und Filtermaterialien, in Gasreinigungsvorrichtungen, in Katalysatoren, in Gasspeichern oder in Schutzbekleidung, insbesondere ABC-Schutzbekleidung.

In Bezug auf weitergehende Einzelheiten zu diesem Erfindungsaspekt kann auf die vorstehenden Ausführungen zu den übrigen erfindungsgemäßen Aspekten verwiesen werden, welche entsprechend auch in Bezug auf diesen Erfindungsaspekt gelten.

Wiederum **weiterer** Gegenstand der vorliegenden Erfindung ist die Verwendung einer wie zuvor beschriebenen erfindungsgemäßen Einheit zur Entfernung von Schad-, Geruchs- und Giftstoffen aller Art, insbesondere aus Luft- und/oder Gasströmen, vorzugsweise in ABC-Schutzmaskenfiltern, Geruchsfiltem, Flächenfiltern, Luftfiltern, insbesondere Filtern für die Raumluftreinigung, adsorptionsfähigen Trägerstrukturen und Filtern für den medizinischen Bereich.

In Bezug auf weitergehende Einzelheiten zu diesem Erfindungsaspekt kann auf die vorstehenden Ausführungen zu den übrigen erfindungsgemäßen Aspekten verwiesen werden, welche entsprechend auch in Bezug auf diesen Erfindungsaspekt gelten.

Schließlich sind wiederum **weiterer** Gegenstand der vorliegenden Erfindung Filter und Filtermaterialien, insbesondere textile Filter und Filtermaterialien, Gasreinigungsvorrichtungen, Katalysatoren, Gasspeicher oder Schutzbekleidung, insbesondere ABC-Schutzbekleidung, welche jeweils unter Verwendung einer wie zuvor beschriebenen erfindungsgemäßen Einheit hergestellt sind bzw. welche jeweils eine wie zuvor beschriebene erfindungsgemäße Einheit aufweisen.

In Bezug auf weitergehende Einzelheiten zu diesem Erfindungsaspekt kann auf die vorstehenden Ausführungen zu den übrigen erfindungsgemäßen Aspekten verwiesen werden, welche entsprechend auch in Bezug auf diesen Erfindungsaspekt gelten.

Weitere Ausgestaltungen, Abwandlungen und Variationen der vorliegenden Erfindung sind für den Fachmann beim Lesen der Beschreibung ohne weiteres erkennbar und realisierbar, ohne dass er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Allgemeines

Alle Chemikalien sind bei Sigma Aldrich, Acros Organics oder Alfa Aesar erhältlich und werden unverändert verwendet. Es werden nur getrocknete bzw. absolute Lösemittel verwendet, die unter Argonatmosphäre und über Molekularsieb aufbewahrt werden. Das Lösungsmittel wird direkt vor der Verwendung entgast, indem unter dynamischer Argonatmosphäre für 1 bis 2 Stunden unter Rückfluss gekocht wird. Die nicht kommerziell erhältlichen Linker Tetrakis(4-bromophenyl)methan **(1)** [R. Rathore, C. L. Burns and I. A. Guzei, Journal of Organic Chemistry 2004, 69, 1524 bis 1530]*,* Tetrakis(4-bromophenyl)silan **(2)** [J.-H. Fournier, X Wang, J. D. Wuest, Canadian Journal of Chemistry, 2003, 81, 376 bis 380]*,* (Silantetrayltetra-4,1-phenylen)tetrakisboronsäure **(3)** [J.-H. Fournier, T. Maris, J. D. Wuest, W. Guo, E. Galoppini, Journal of the American Chemical Society, 2003, 125, 1002 bis 1006] und Tris(4-bromophenyl)-1,3,5-benzen **(4)** [J. Palomero, J. A. Mata, F. Gonzáles, E. Peris, New Journal of Chemistry, 2002, 26, 291 bis 297] werden nach bekannten Vorschriften synthetisiert.

### Synthese von Poly(4,4"-p-terphenylen)methan (PTPM) - OFS-1

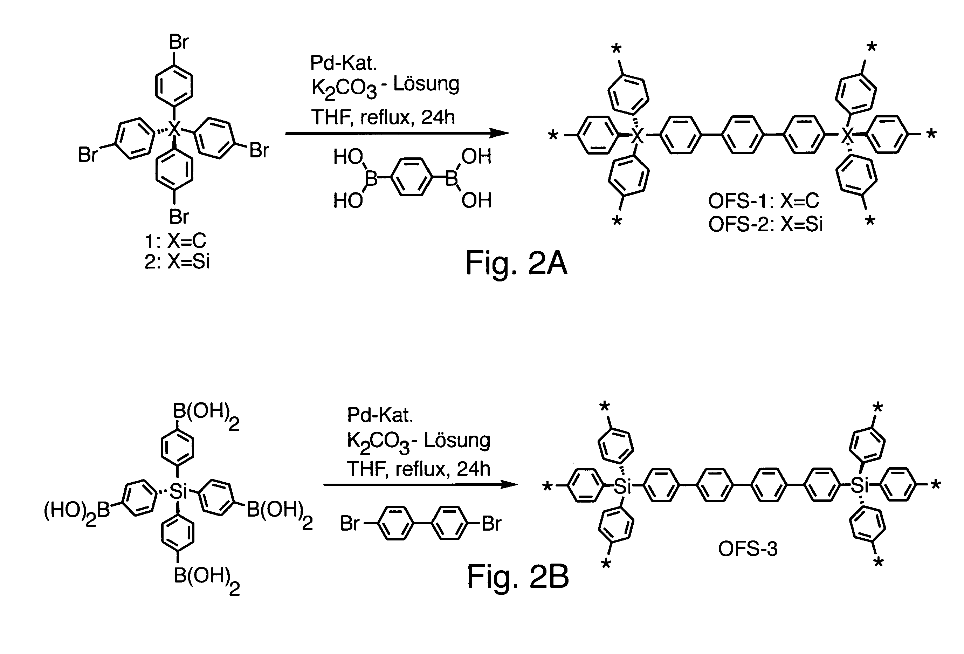

Zu dem vor der Reaktion nach oben genannter Prozedur frisch entgastem Lösungsmittelgemisch aus 45 ml THF und 5 ml wässriger 2M K₂CO₃-Lösung werden 0,160 g (0,25 mmol) Tetrakis(4-bromophenyl)methan, 0,083 g (0,50 mmol) 1,4-Benzendiboronsäure und 4 Mol-% des entsprechenden Pd-Katalysators in Bezug auf **(1)**, gegebenenfalls mit äquimolaren Mengen eines zusätzlichen Liganden, zugegeben. Das Reaktionsgemisch wird unter statischer Ar-Atmosphäre für 24 Stunden unter Rückfluss gekocht. Der entstehende Niederschlag wird abgesaugt und mit THF, Wasser und Ethanol je dreimal gewaschen. Das Produkt wird im Trockenschrank bei ca. 90°C oder unter Vakuum getrocknet. Die Synthese von OFS-1 ist schematisch in Fig. 2A dargestellt.

### Synthese von Poly(4,4"-p-terphenylen)silan (PTPS) - OFS-2

Zu dem vor der Reaktion nach oben genannter Prozedur frisch entgastem Lösungsmittelgemisch aus 45 ml THF und 5 ml wässriger 2M K₂CO₃-Lösung werden 0,163 g (0,25 mmol) Tetrakis(4-bromophenyl)silan, 0,083 g (0,25 mmol) 1,4-Benzendiboronsäure und 4 Mol-% des entsprechenden Pd-Katalysators in Bezug auf **(2)**, gegebenenfalls mit äquimolaren Mengen eines zusätzlichen Liganden, zugegeben. Das Reaktionsgemisch wird unter statischer Ar-Atmosphäre für 24 Stunden unter Rückfluss gekocht. Der entstehende Niederschlag wird abgesaugt und mit THF, Wasser und Ethanol je dreimal gewaschen. Das Produkt wird im Trockenschrank bei ca. 90 °C oder unter Vakuum getrocknet. Die Synthese von OFS-2 ist schematisch in Fig. 2A dargestellt.

### Synthese von Poly(4,4"'-p-quaterphenylen)silan (PQPS) - OFS-3

Zu dem vor der Reaktion nach oben genannter Prozedur frisch entgastem Lösungsmittelgemisch aus 45 ml THF und 5 ml wässriger 2M K₂CO₃-Lösung werden 0,150 g (0,29 mmol) (Silantetrayltetra-4,1-phenylen)tetrakisboronsäure, 0,180 g (0,59 mmol) 4,4'-Dibrombiphenyl und 4 Mol-% des entsprechenden Pd-Katalysators in Bezug auf **(3)**, gegebenenfalls mit äquimolaren Mengen eines zusätzlichen Liganden, zugegeben. Das Reaktionsgemisch wird unter statischer Ar-Atmosphäre für 24 Stunden unter Rückfluss gekocht. Der entstehende Niederschlag wird abgesaugt und mit THF, Wasser und Ethanol je dreimal gewaschen. Das Produkt wird im Trockenschrank bei ca. 90 °C oder unter Vakuum getrocknet. Die Synthese von OFS-3 ist schematisch in Fig. 2B dargestellt.

### Synthese von Poly(1,3,5-tris-(p-biphenylbenzen)silan) - OFS-4

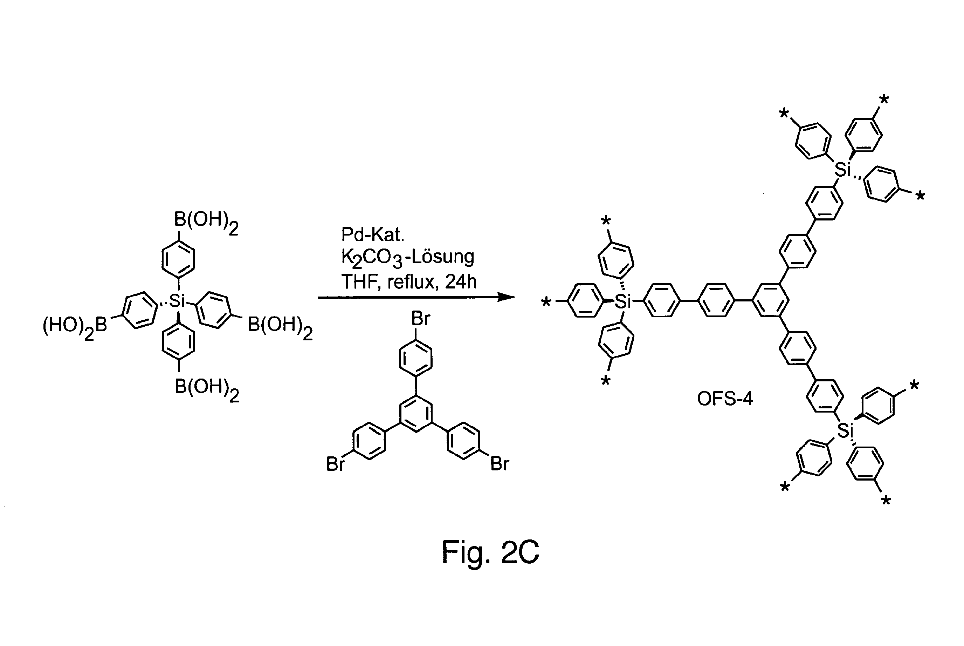

Zu dem vor der Reaktion nach oben genannter Prozedur frisch entgastem Lösungsmittelgemisch aus 45 ml THF und 5 ml wässriger 2 M K₂CO₃-Lösung werden 0,150 g (0,29 mmol) (Silantetrayltetra-4,1-phenylen)tetrakisboronsäure, 0,212 g (0,39 mmol) Tris(4-bromophenyl)-1,3,5-benzen und 4 Mol-% des entsprechenden Pd-Katalysators in Bezug auf (3), gegebenenfalls mit äquimolaren Mengen eines zusätzlichen Liganden, zugegeben. Das Reaktionsgemisch wird unter statischer Ar-Atmosphäre für 24 Stunden unter Rückfluss gekocht. Der entstehende Niederschlag wird abgesaugt und mit THF, Wasser und Ethanol je dreimal gewaschen. Das Produkt wird im Trockenschrank bei ca. 90 °C oder unter Vakuum getrocknet. Die Synthese von OFS-4 ist schematisch in Fig. 2C dargestellt.

### Charakterisierung

Die Stickstoffphysisorption wird an NOVA 2000 und AUTOSORB 1-C bei 77 K gemessen. Die Wasserstoffphysisorption wird ebenfalls an AUTOSORB 1-C bei 77 K und die Wasserdampfphysisorption an HYDROSORB 1000 bei 298 K durchgeführt. Alle genannten Adsorptionsgeräte stammen von der Firma Quantachrom. Jede Probe wird direkt vor den Adsorptionsmessungen für mindestens fünf Stunden bei 150 °C unter Vakuum aktiviert.

FT-IR-Spektren werden am FT-IR-Spektrometer Magna-IR 550 Series II der Firma Nicolet aufgenommen.

Elementaranalysen werden als Verbrennungsanalysen am Institut für Organische Chemie der TU Dresden mit dem Gerät EA 3000 Euro Vector CHNSO Elementaranalysator der Firma Hekatech durchgeführt.

Die thermoanalytischen Messungen (DTA/TG) werden am Institut für Anorganische Chemie an der Simultanen Thermoanalyseapparatur STA 409 der Firma Netzsch durchgeführt.

Die Festkörper-NMR-Messungen der aktivierten Proben (mindestens 5 h bei 150 °C) werden am Institut für Experimentelle Physik II der Universität Leipzig durchgeführt. Die Proben werden am MSL 500 der Firma BRUKER mit einer kernabhängigen Resonanzfrequenzen von 125,75 MHz (¹³C) gemessen. Für die ¹³C-CP (*cross polarization*) MAS-NMR-Spektren beträgt die Impulslänge 5,9 µs, die Wiederholzeit 5 s, die Mixzeit 3 ms und die Rotationsfrequenz 12 kHz. Für jedes Spektrum werden 2048 Scans akkumuliert. Für die ¹³C -Experimente werden 4 mm ZrO₂-Rotoren verwendet.

### Ergebnisse und Diskussion

Die Synthese von Netzwerkverbindungen über eine Pd-katalysierte Kreuzkupplung, wie die Suzuki-Kupplung, führt zu hochmikroporösen Materialien, die eine ungeordnete Struktur aufweisen und somit völlig amorph sind. Dass keine geordnete Struktur erreicht werden kann, ist auf den katalysierten und damit kinetisch kontrollierten und nicht reversiblen Reaktionsweg zurückzuführen. Um geordnete Strukturen zu erhalten, sind thermodynamisch kontrollierte, reversible Reaktionen notwendig, wie sie im Fall der COFs und CTFs vorliegen [P. Kuhn, M Antonietti, A. Thomas, Angewandte Chemie, 2008*;* A. P. Côté, A. I. Benin, N. W. Ockwig, M. O'Keeffe, A. J. Matzger and O. M Yaghi, Science, 2005, 310, 1166 bis 1170]*.*

### Optimierung der Synthesebedingungen

Die Synthesebedingungen der neuen Materialien werden anhand der Synthese von OFS-1 im Hinblick auf die Größe der spezifischen Oberfläche optimiert. Dazu wird vor allem der Einfluss des verwendeten Pd-Katalysators (vgl. Fig. 3) und des Lösungsmittels untersucht. Es zeigt sich, dass verschiedene Liganden am katalytisch aktiven Palladium die Aktivität erheblich beeinflussen. Als optimaler Katalysator hat sich ein 1:1-Gemisch von b und c gemäß Fig. 3 herausgestellt. In Tabelle 1 sind die Ergebnisse der Variation verschiedener Parameter zusammengefasst.

**Tabelle 1: Abhängigkeit der spezifischen Oberfläche von verschiedenen Parametern der Synthese von OFS-1**

| **Katalysator** | **Lösungsmittel** | **S_{SP-BET}(p/p₀=0,3) /m²g⁻¹** |
|---|---|---|
| a | Tetrahydrofuran (THF) | 835 |
| a | THF | 990 |
| a | Diethylether | - / kein Polymer |
| b | THF | 552 |
| a + c | THF | - / kein Polymer |
| **b + c** | **THF** | **1380** |
| b + d | THF | 827 |
| b + e | THF | - / kein Polymer |
| a+c | Dioxan | 1133 |
| a+c | 1,2-Dimethoxyethan | 364 |
| f | N,N-Dimethylformamid | 46 |

### Charakterisierung der Porosität und Physisorptionseigenschaften

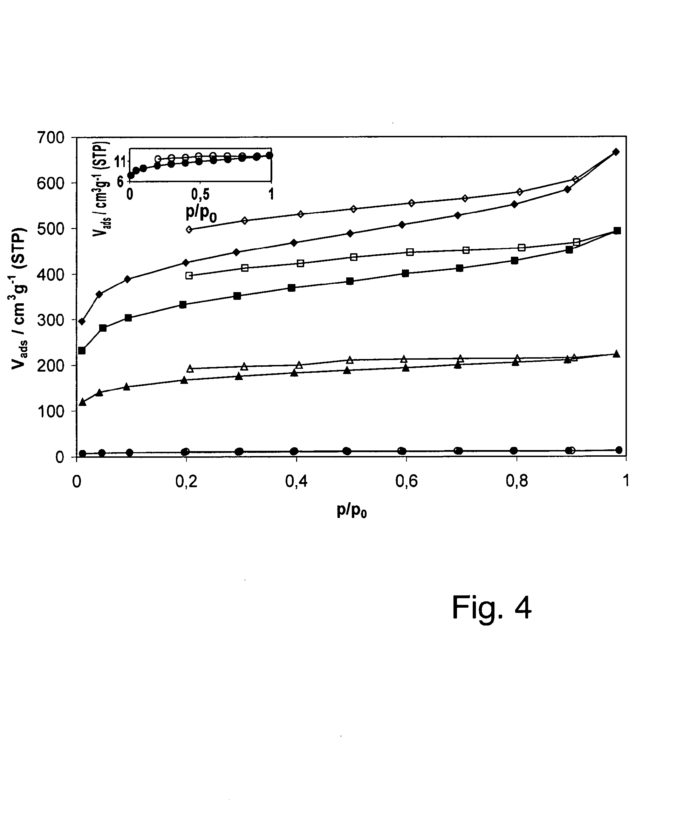

Zur Charakterisierung der Porosität wird für alle Proben die Stickstoffphysisorption bei 77 K gemessen (Fig. 4). Alle Verbindungen (OFS-1 bis OFS-4) sind mikroporös. Es liegen Isothermen als Mischung von Typ I und II nach der IUPAC-Klassifizierung vor. Nach der Adsorption in den Mikroporen bei sehr kleinem Relativdruck zeigen die Isothermen einen kontinuierlichen Anstieg, was auf die Adsorption sehr kleiner Partikel an der äußeren Oberfläche zurückzuführen ist. Der leichte Anstieg bei einem Relativdruck p/p₀ > 0,9 deutet auf eine Stickstoffkondensation in Makroporen bzw. in interpartikulären Zwischenräumen hin. Über den gesamten Relativdruckbereich bildet die Desorption eine Hysterese aus. Dieser Effekt wurde für ungeordnete, poröse Polymere schon mehrfach beschrieben [M. P. Tsyurupa, V. A. Davankov, Reactive & Functional Polymers, 2006, 66, 768 bis 779*;* B. S. Ghanem, K. J. Msayib, N. B. McKeown, K. D. M. Harris, Z. Pan, P. M. Budd, A. Butler, J. Selbie, D. Book, A. Walton, Chemical Communications, 2007, 67 bis 69] und auf ein dynamisches Verhalten der Verbindung, das sich in einem Aufquellen des Netzwerks durch kondensiertes Adsorbat bemerkbar macht, zurückgeführt. Die Isothermen werden nach der BET-Theorie und der t-Plot-Mikroporenanalyse (vgl. Tabelle 2) ausgewertet.

**Tabelle 2: Spezifische Oberfläche, externe Oberfläche und Mikroporenvolumen aus der Stickstoffphysisorption bei 77 K**

| | **S_{SP-BET}(p/p₀=0.3) / m²g⁻¹** | **Sₑₓₜₑᵣₙ(t-Plot) / m²g⁻¹** | **Vₘᵢₖᵣₒ(t-Plot) / cm³g⁻¹** |
|---|---|---|---|
| OFS-1 | 1380 | 206 | 0,63 |
| OFS-2 | 1083 | 136 | 0,51 |
| OFS-3 | 540 | 45 | 0,26 |
| OFS-4 | 602 | 57 | 0,30 |

Die aus der Stickstoffphysisorption bestimmten Werte von OFS-4 sind eher ein Indiz für ein feinpartikuläres aber unporöses Pulver. Allerdings tritt auch bei dieser Verbindung eine entsprechend schwach ausgeprägte Hysterese über den gesamten Relativdruckbereich auf. Daraus kann auf eine Quellfähigkeit und damit auf einen vorhandenen Porenraum geschlussfolgert werden. Die abnehmende Oberfläche, die bei der Linkervergrößerung von OFS-2 über OFS-3 zu OFS-4 beobachtet werden kann, ist auf eine größere Durchdringung der amorphen Strukturen und auf eine höhere Flexibilität der Netzwerke zurückzuführen.

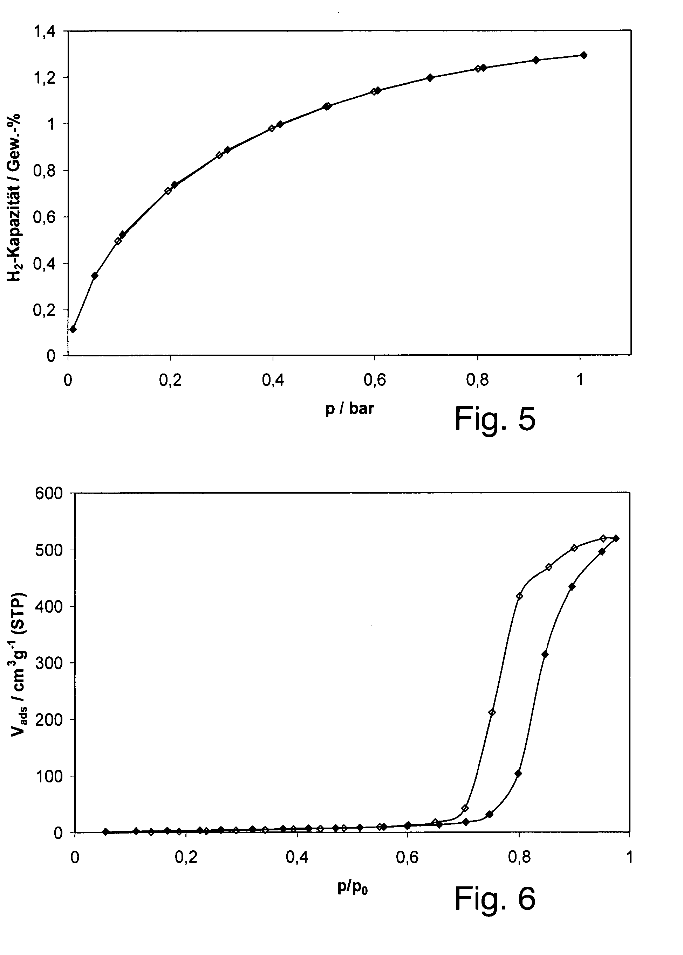

In der Literatur wird für viele poröse Polymere eine gute Wasserstoffspeicherkapazität angegeben [N. B. McKeown, P. M. Budd, D. Book, Macromolecular Rapid Communications, 2007, 28, 995 bis 1002*;* J.-Y Lee, C. D. Wood, D. Bradshaw, M. J. Rosseinsky, A. I. Cooper, Chemical Communications, 2006, 2670 bis 2672]*.* Für OFS-1 wird die Wasserstoffphysisorption bei 77 K gemessen (Fig. 5). Die Verbindung besitzt eine Wasserstoffspeicherkapazität von 1,29 Gew.-% bei einem Druck von 1 bar, wobei noch keine Sättigung erreicht wird, so dass von einer noch höheren Kapazität bei höherem Druck ausgegangen werden kann.

Da die Netzwerke im Idealfall ausschließlich aus aromatischen Phenylenringen, über Kohlenstoff- oder Siliziumatome verbunden, aufgebaut sind, ist eine extrem unpolare Oberfläche zu erwarten. Mittels Wasserdampfphysisorption bei 298 K wird dieses Verhalten für OFS-1 bestätigt (Fig. 6). Bei kleinem Relativdruck findet keine Adsorption statt. Erst ab p/p₀ = 0,8 wird Wasserdampf in den Poren adsorbiert. Die vollständige Desorption des Wassers und die Tatsache, dass die Verbindungen schon bei der Aufarbeitung mit Wasser gewaschen werden, deuten auf eine sehr gute Hydrolysebeständigkeit hin. Das aus der Gesamtmenge adsorbierter Wassermoleküle berechnete Porenvolumen bei p/p₀ = 0,975 ist mit 0,42 cm³g⁻¹ um ca. 30 % geringer als das aus der Stickstoffphysisorption bestimmte Mikroporenvolumen, was ein weiterer Hinweis auf eine extrem hydrophobe innere Oberfläche ist. Das Wasser wird vorzugsweise an wenig vorhandenen, polareren Zentren auf der Oberfläche adsorbiert, wodurch die polare "Oberfläche" durch wachsende Wassermolekülansammlungen zunimmt. Durch dieses Wachstum wird die unpolare Oberfläche überbrückt (*"bridging effect"* [E. A. Müller, K. E. Gubbins, Carbon, 1998, 36, 1433 bis 1438]) bis es schließlich zur Kondensation im Inneren der Poren kommt. Der verbleibende freie Porenraum direkt über der unpolaren Oberfläche führt zu dem geringeren Porenvolumen im Gegensatz zu den vollständig mit Stickstoffmolekülen gefüllten Poren.

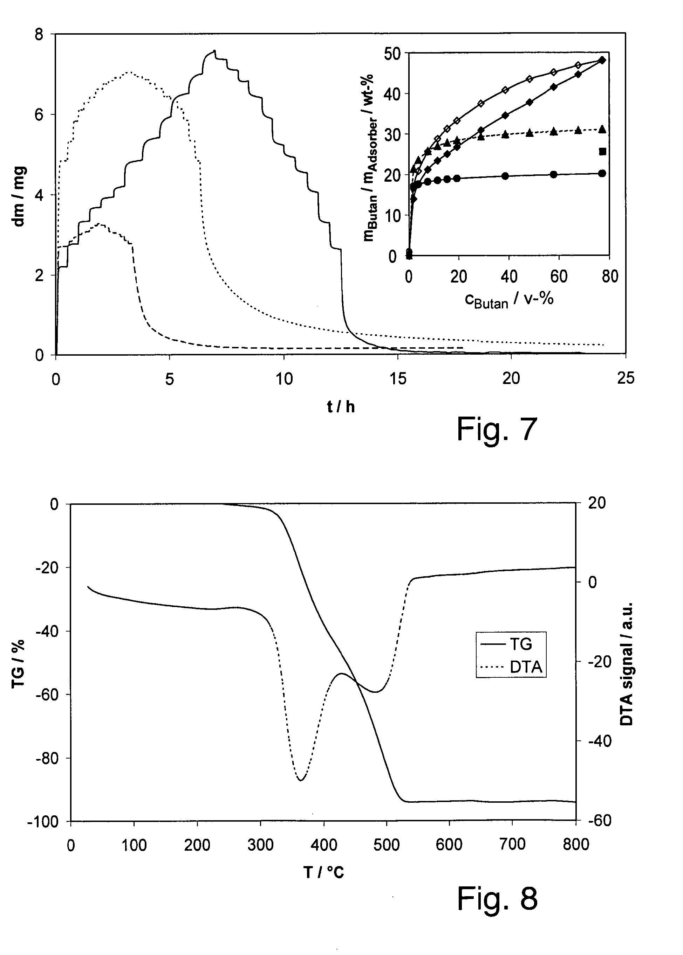

Dass sich diese extrem unpolare Oberfläche zur Adsorption von unpolaren Stoffen eignet, wird mittels Butanphysisorption bei 303 K gezeigt (Fig. 7). Zum Vergleich sind die Adsorptionsdaten der kommerziellen Aktivkohle Sorbonorit und der metallorganischen Gerüstverbindung (MOF) Cu₃(BTC)₂ (BTC = 1,3,5-Benzentricarboxylat) dargestellt. Die Aktivkohle zeichnet sich durch eine relativ hydrophobe spezifische Oberfläche von ca. 1.400 m²g⁻¹ aus, während Cu₃(BTC)₂ mit vergleichbarer spezifischer BET-Oberfläche durch freie Metallzentren einen hydrophilen Charakter aufweist. Sorbonorit und Cu₃(BTC)₂ zeigen eine schnelle Adsorption bei kleinen Butankonzentrationen, wobei bei ca. 20 Vol.-% Butan eine Sättigung eintritt. Dagegen adsorbiert OFS-1 mit einer vergleichbaren spezifischen BET-Oberfläche von 1.380 m²g⁻¹ nach einem starken Anstieg bei geringer Konzentration stetig mehr Butan, was auf die Quellfähigkeit des Netzwerks zurückgeführt wird. Das ist auch der Grund, weshalb die Gleichgewichtseinstellung bei höheren Konzentrationen für OFS-1 länger dauert als bei den Materialien mit starrem Gerüst. Die Gesamtspeicherkapazität von Butan ist für OFS-1 mit 48,1 Gew.-% etwa 1,5-fach größer als von der normal hydrophoben Aktivkohle *Sorbonorit* mit 31,1 Gew.-% und 2,4-fach größer als vom hydrophilen Cu₃(BTC)₂ mit 20,2 Gew.-%. Auch die nur schwach poröse Verbindung OFS-4 mit einer spezifischen Oberfläche von 31 m²g⁻¹ adsorbiert 25,6 Gew.-% Butan, was deutlich mehr ist als bei hochporösem Cu₃(BTC)₂. Damit wird gezeigt, dass sich mit Vergrößerung der Linker Netzwerke ausbilden, die im aktivierten Zustand teilweise kollabiert vorliegen, aber durch bestimmte Adsorptive mit entsprechend starker Wechselwirkung bei der Adsorption aufquellen können.

Diese Daten belegen die bevorzugte Adsorption von unpolaren Stoffen, so dass die Materialien insbesondere für Anwendungen in Trennprozessen von unpolaren/polaren Medien geeignet sind.

### Charakterisierung von Stabilität, Zusammensetzung und Struktur

Die Verbindung OFS-1 wird im Hinblick auf ihre thermische Stabilität mittels DTA/TG untersucht (Fig. 8). Eine Zersetzung ist ab einer Temperatur von 300 °C zu beobachten. Das DTA-Signal zeigt zwei Maxima bei 365 und 485 °C. Die erste Zersetzungsstufe wird auf die Verbrennung von organischen Gruppen zurückgeführt, die nicht verknüpfend in das Netzwerk eingebaut sind und den Porenraum durchdringen. Bei der zweiten Stufe wird dann die gerüstbildende Organik zersetzt. Theoretisch wäre eine vollständige Verbrennung der Verbindung zu erwarten, jedoch bleibt ein Rest von ca. 6 Gew.-% übrig. Dieser Rückstand ist teilweise auf gegebenenfalls im Netzwerk verbliebene Katalysatorreste zurückzuführen, die auch die graubraune Farbe der Verbindungen hervorrufen könnten.

Mit EDX-Untersuchungen von OFS-1 und OFS-2 (vgl. Tabelle 3) kann gezeigt werden, dass die Gewichtsanteile von Kohlenstoff in beiden Verbindungen gut mit den theoretisch berechneten Werten übereinstimmen. Neben dem Kohlenstoff als Hauptbestandteil der Netzwerke können Phosphor aus den Liganden des Katalysators, Bor aus nicht umgesetzten Boronsäuregruppen und in OFS-1 Spuren von Palladium nachgewiesen werden. In OFS-2 ist auch eine geringe Menge Sauerstoff gefunden wurden, der wahrscheinlich ebenfalls aus nicht umgesetzten Boronsäuregruppen stammt.

**Tabelle 3: Ergebnisse der EDX-Analyse von OFS-1 und OFS-2; Pd und B wurden nicht direkt detektiert (Werte: gemessen / theoretisch)**

| OFS-1 Element | Atom-% | Gew.-% | OFS-2 Element | Atom-% | Gew.-% |
|---|---|---|---|---|---|
| C | 96,21 / 60,70 | 95,74 / 94,84 | C | 89,88 / 59,02 | 88,50 / 89,21 |
| P | 0,20 / - | 0,51 / - | Si | 1,43 / 1,64 | 3,30 / 5,80 |
| B | 3,52 / - | 3,15 / - | O | 0,88 / - | 1,15 / - |
| O | 0,00 / - | 0,00 / - | P | 0,08 / - | 0,19 / - |
| Pd | 0,07/- | 0,59 / - | B | 7,74 / - | 6,86 / - |

Die genauere Zusammensetzung der Verbindungen wird mittels Elementaranalysen in Form von Verbrennungsanalysen ermittelt.

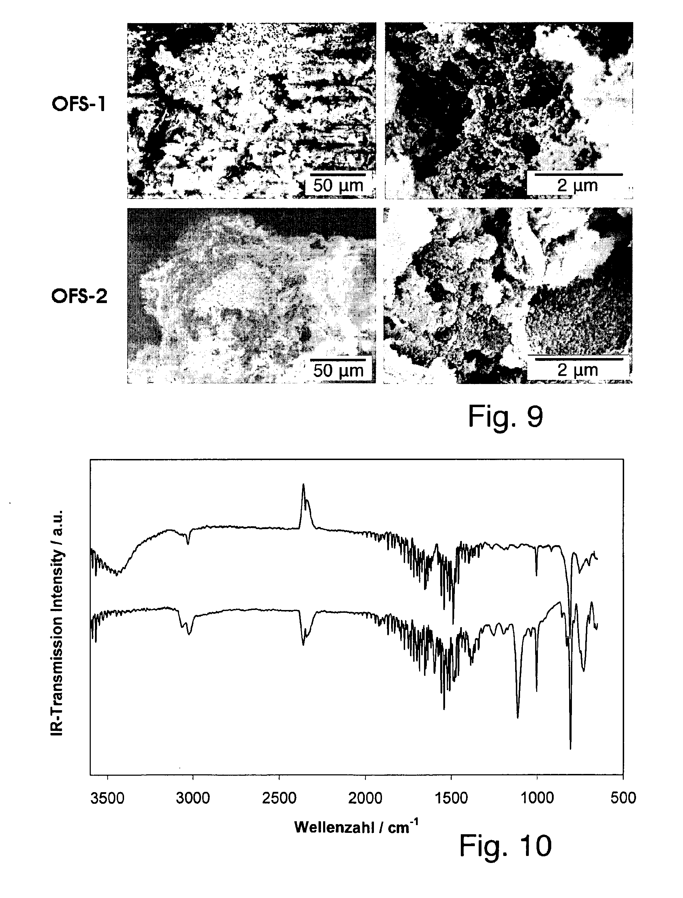

Rasterelektronenmikroskopische Aufnahmen der Pulverproben von OFS-1 und OFS-2 zeigen keine strukturierte Morphologie (Fig. 9). Im Fall von OFS-1 sind bei 20.000-facher Vergrößerung einzelne aggregierte Partikel zu erkennen. Aufgrund der Natur der Probe ist es nicht möglich, das Bild weiter zu vergrößern. Aus der Aufnahme kann die Partikelgröße näherungsweise bestimmt werden. Es ergibt sich ein Durchmesser von 50 bis 100 nm für die stark aggregierten Partikel.

Um Aussagen zur Struktur von OFS-1 machen zu können, wird die Verbindung mittels FTIR- und ¹³C-CP-MAS-NMR-Spektroskopie untersucht. In den FTIR-Spektren (Fig. 10) sind vor allem die Banden im Bereich 3.030 bis 3.070 cm⁻¹ von Bedeutung, die von C-H-Valenzschwingungen in aromatischen Ringen hervorgerufen werden, woraus die Polymere überwiegend aufgebaut sind. Im Spektrum von OFS-2 fällt eine sehr starke Bande bei 1.112 cm⁻¹ auf, die bei OFS-1 fehlt. Diese ist auf die Schwingung der Si-C-Bindung zurückzuführen, welche die Verknüpfung der aromatischen Linker im Netzwerk ausmacht. Eine starke Bande in beiden Spektren bei ca. 812 cm⁻¹ ist auf zwei benachbarte aromatische C-H-Gruppen zurückzuführen, welche die Substitution aller Phenylenringe in para-Position bedingt.

Im ¹³C-CP-MAS-NMR-Spektrum von OFS-1 (Fig. 11) ist eine Gruppe von Signalen bei einer chemischen Verschiebung von -120 bis -145 ppm zu sehen. Diese Signale stammen von aromatischen Kohlenstoffatomen, die in Form von Phenylenringen einen Großteil der Verbindung ausmachen. Das Signal bei einer chemischen Verschiebung von etwa 60 ppm repräsentiert den kleinen Anteil aliphatischer Kohlenstoffatome, welche die aromatischen Linker verbinden.

### Zusammenfassung

Über eine an sich bekannte synthetische Methode, die Suzuki-Kupplung zur Knüpfung von aromatischen C-C-Bindungen, welche bislang im Stand der Technik nur zur Synthese niedermolekularer Verbindungen angewandt wurde, wird anhand der Synthese von vier Polymernetzwerken überraschend gezeigt, dass es möglich ist, hochporöse polymere Adsorbentien über diese Methode maßzuschneidern. Die Synthese wird im Hinblick auf die spezifische Oberfläche der Verbindungen optimiert. Mit zunehmender Größe der aromatischen Linker wird eine Abnahme der spezifischen Oberfläche beobachtet, was auf eine stärkere Durchdringung und eine höhere Flexibilität der amorphen Netzwerke zurückgeführt wird. Mittels Wasserdampfphysisorption wird die innere Oberfläche von OFS-1 untersucht. Aufgrund der aromatischen Linker und der damit unpolaren Natur der gesamten Netzwerke sind die Verbindungen stark hydrophob und übertreffen mit dieser Eigenschaft die meisten kommerzielle Aktivkohlen. Somit sind sie sehr gut zur Adsorption von unpolaren Verbindungen, wie Kohlenwasserstoffen, geeignet. Mittels Butanphysisorption wird gezeigt, dass OFS-1 bei vergleichbarer spezifischer Oberfläche eine viel größere Butanspeicherkapazität aufweist als die kommerzielle Aktivkohle Sorbonorit und die metallorganische Koordinationsverbindung Cu₃(BTC)₂ mit einer eher polaren und damit hydrophilen Oberfläche. Die Verbindung OFS-4, die nur eine sehr geringe N₂-Physisorption mit einer spezifischen Oberfläche von 31 m²g⁻¹ aufweist, adsorbiert mehr Butan als das hochporöse Cu₃(BTC)₂, womit die Quellfähigkeit der Netzwerkverbindungen belegt wird.

### Verwendung erfindungsgemäßer OFS-Materialien zur Herstellung in Gasspeicher

Die zuvor beschriebenen, porösen organischen OFS-Polymere vom Typ OFS-1, OFS-2, OFS-3 bzw. OFS-4 werden als Gasspeichermedium für Wasserstoff eingesetzt. Zu diesem Zweck werden sie an einen komprimierten dreidimensionalen Schaumstoffträger mittels eines Bindemittels fixiert, und der auf diese Weise erhaltene Verbund aus Schaumstoff mit hieran fixierten Polymeren wird in einen Gasspeichertank eingebracht. Alle Materialien weisen identische Auflagemengen an OFS-Material auf. In einem fünften Ansatz wird die Hälfte des OFS-Materials vom Typ OFS-1 durch eine mikroporöse Aktivkohle in Kugelform (mittlerer Durchmesser: 0,01 mm) von der Fa. AdsorTech GmbH, Premnitz, Deutschland, ersetzt. Anschließend wird die Wasserstoffspeicherkapazität bzw. Wasserstoffbeladungskapazität bei einem Druck von 3 bar bestimmt. Diese liegt bei dem Material, welches mit OFS-1 bzw. OFS-2 bzw. OFS-3 bzw. OFS-4 bzw. OFS-1/Aktivkohle beaufschlagt ist, bei 2,2 Gew.-% bzw. 2,5 Gew.-% bzw. 2,6 Gew.-% bzw. 2,9 Gew.-% bzw. 5,8 Gew.-%, bezogen jeweils auf die Gesamtmenge an Adsorbens bzw. Sorptionsmaterial (d. h. poröse Polymere bzw. poröse Polymere plus Aktivkohle). Die Werte beziehen sich auf Temperaturen von 77 K. Die Ergebnisse zeigen, dass die verschiedenen erfindungsgemäßen Einheiten gute Wasserstoffspeicher bzw. Wasserstoffbeladungseigenschaften aufweisen, welche durch Kombination mit einem weiteren Adsorbens (hier konkret: Aktivkohle) signifikant gesteigert werden können.

### Herstellung von textilen Flächenfiltermaterialien

Es werden fünf Sorptionsfiltermaterialien hergestellt, wobei als Trägermaterialien jeweils ein luftdurchlässiges textiles Flächenmaterial in Form eines oleophobierten und hydrophobierten Polyestergewebes mit einem Flächengewicht von ca. 70 g/m² dient. In allen vier Fällen werden partikuläre poröse Polymerpartikel vom Typ OFS-1 bzw. OFS-2 bzw. OFS-3 bzw. OFS-4 und im fünften Fall eine 50 : 50-Mischung von OFS-1/mikroporöse Aktivkohle (Kugelform, wie zuvor beschrieben) verwendet (Auflagemengen jeweils: ca. 35 Gew.-% in Bezug auf das Filtermaterial). Zu diesem Zweck werden die agglomerat-, korn- oder kugelförmigen Partikel mittels eines Klebstoffs (Auftragsmenge an Klebstoff jeweils ca. 5 g/m²) in punktrasterförmiger und gleichmäßiger Verteilung auf dem Trägermaterial fixiert. Alle OFS-Materialien wurden vorher mit einer Metallsalzimprägnierung (Cu/Zn/Ag-Imprägnierung mit ca. 3,9 Gew.-% Imprägnierung, bezogen auf Partikel) versehen.

An allen fünf Filtermaterialien werden die jeweiligen Barrierewirkungen gegenüber Senfgas und Soman gemäß Methode 2.2 der CRDEC-SP-84010 im Rahmen des so genannten konvektiven Strömungstests (*convective flow test*) bestimmt; zu diesem Zweck lässt man bei konstantem Strömungswiderstand mit einer Strömungsgeschwindigkeit von ca. 0,45 cm/s einen Senfgas bzw. Soman enthaltenden Luftstrom auf das jeweilige Filtermaterial einwirken und bestimmt die flächenbezogene Durchbruchmenge nach 16 Stunden (80 % relative Luftfeuchtigkeit; 32 °C; 10 • 1 µl HD/12,56 cm² bzw. 12 • 1 µl GD/12,56 cm²). Alle Materialien lieferten sowohl im Hinblick auf Senfgas als auch im Hinblick auf Soman Werte unterhalb von 2 µg/cm², wobei das Filtermaterial mit der Kombination von OFS-Material/Aktivkohle die besten Werte zeigte.

Alle Filtermaterialien zeigen im Übrigen Schutzwirkung gegenüber Mikroorganismen: Bei Versuchen zur Überprüfung der biostatischen Eigenschaften nach ASTM E2149-01 mit *Klebsiella pneumoniae* bzw. *Staphylococcus aureus* (jeweils 1,5 bis 3,0 • 10⁵ CFU/ml) liegt die prozentuale Reduktion in Bezug auf diese beiden Erreger nach 24 Stunden bei allen Materialien oberhalb von 90 %.

## Patentansprüche

1. Einheit, umfassend eine Mehrzahl von Partikeln auf Basis von porösen organischen Polymeren, wobei die organischen Polymere durch Kreuzkupplung, insbesondere Suzuki-Kupplung, von Arylboronsäuren mit Halogenaromaten erhältlich sind.

2. Einheit nach Anspruch 1, **dadurch gekennzeichnet,**
**dass** die Kreuzkupplung, insbesondere Suzuki-Kupplung, unter Katalyse, vorzugsweise übergangsmetallkatalysiert, besonders bevorzugt palladiumkatalysiert (Pd-katalysiert), ganz besonders bevorzugt Pd(0)-katalysiert, durchgeführt wird, insbesondere wobei der eingesetzte Katalysator ausgewählt wird aus der Gruppe von Edelmetallen, insbesondere Palladium, bevorzugt Pd(0), insbesondere in der Form von Palladium-Phosphin-Komplexen, bevorzugt Palladium-Phosphinligand-Komplexen, und/oder
**dass** die Kreuzkupplung, insbesondere Suzuki-Kupplung, als Festkörper- und/oder Feststoffreaktion oder aber bevorzugt als Reaktion in flüssiger Phase, insbesondere in Lösung oder Dispersion, durchgeführt wird und/oder
**dass** die Kreuzkupplung, insbesondere Suzuki-Kupplung, in einem basischen Milieu und/oder basisch katalysiert, insbesondere in Gegenwart mindestens einer Base, durchgeführt wird und/oder dass die Kreuzkupplung, insbesondere Suzuki-Kupplung, bei Temperaturen im Bereich von -50 °C bis 250 °C, insbesondere -5 °C bis 200 °C, vorzugsweise 0 °C bis 150 °C, durchgeführt wird und/oder dass die Kreuzkupplung, insbesondere Suzuki-Kupplung, bei einem Druck im Bereich von 0,01 bis 50 bar absolut, insbesondere 0,1 bis 10 bar absolut, vorzugsweise unter Atmosphärendruck (1,013 bar absolut), durchgeführt wird.

3. Einheit nach Anspruch 1 oder 2, **dadurch gekennzeichnet, dass** die organischen Polymere jeweils eine nichtlineare vernetzte, insbesondere zwei- und/oder dreidimensional vernetzte, vorzugsweise sternförmig und/oder tetraederförmig vernetzte, Struktur aufweisen.

4. Einheit nach einem der vorangehenden Ansprüche, **dadurch gekennzeichnet, dass** die organischen Polymere jeweils eine Vielzahl sich wiederholender Struktureinheiten vom Biphenylyltyp aufweisen, insbesondere wobei die Anzahl der sich wiederholenden Struktureinheiten je Polymermolekül mindestens 25, insbesondere mindestens 50, vorzugsweise mindestens 75, besonders bevorzugt mindestens 100, beträgt und/oder insbesondere wobei die Anzahl der sich wiederholenden Struktureinheiten je Polymermolekül bis zu 10.000.000, insbesondere bis zu 5.000.000, vorzugsweise bis zu 1.000.000, besonders bevorzugt bis zu 500.000, beträgt und/oder insbesondere wobei die Anzahl der sich wiederholenden Struktureinheiten je Polymermolekül im Bereich von 25 bis 10.000.000, insbesondere 50 bis 5.000.000, vorzugsweise 75 bis 1.000.000, besonders bevorzugt 100 bis 500.000, liegt, und/oder insbesondere wobei die Kohlenstoffatome der Phenylringe der Struktureinheiten vom Biphenyltyp zumindest teilweise durch Heteroatome, insbesondere Stickstoffatome, ersetzt sind.

5. Einheit nach einem der vorangehenden Ansprüche, **dadurch gekennzeichnet, dass** die organischen Polymere jeweils eine Vielzahl sich wiederholender Struktureinheiten vom Typ 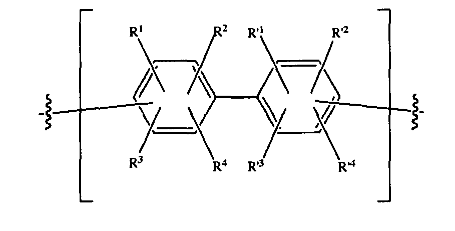 aufweisen, wobei die Reste R¹, R², R³, R⁴, R'¹, R'², R'³ und R'⁴, jeweils unabhängig voneinander, ein Wasserstoffatom oder einen gegebenenfalls substituierten organischen Rest, insbesondere eine Alkyl-, Alkenyl-, Alkinyl-, Aryl-, Arylalkyl-, Alkylaryl-, Alkoxy- oder Amingruppe, oder ein Halogenatom, insbesondere Chlor, Brom oder Iod, bezeichnen und/oder wobei mindestens zwei der Reste R¹, R², R³ und R⁴ oder der Reste R'¹, R'², R'³ und R'⁴ einen gegebenenfalls kondensierten Ring bilden, insbesondere wobei die Anzahl der sich wiederholenden Struktureinheiten je Polymermolekül mindestens 25, insbesondere mindestens 50, vorzugsweise mindestens 75, besonders bevorzugt mindestens 100, beträgt und/oder insbesondere wobei die Anzahl der sich wiederholenden Struktureinheiten je Polymermolekül bis zu 10.000.000, insbesondere bis zu 5.000.000, vorzugsweise bis zu 1.000.000, besonders bevorzugt bis zu 500.000, beträgt und/oder insbesondere wobei die Anzahl der sich wiederholenden Struktureinheiten je Polymermolekül im Bereich von 25 bis 10.000.000, insbesondere 50 bis 5.000.000, vorzugsweise 75 bis 1.000.000, besonders bevorzugt 100 bis 500.000, liegt.

6. Einheit nach Anspruch 4 oder 5, **dadurch gekennzeichnet, dass** die sich wiederholenden Struktureinheiten statistisch über das Polymer und/oder das polymere Netzwerk verteilt sind.

7. Einheit nach einem der vorangehenden Ansprüche, **dadurch gekennzeichnet,**
**dass** die organischen Polymere thermisch beständig sind, insbesondere bis zu Temperaturen von mindestens 100 °C, insbesondere mindestens 150 °C, vorzugsweise mindestens 200 °C, besonders bevorzugt mindestens 300 °C, und/oder
**dass** die organischen Polymere und/oder die Polymerpartikel gegenüber protischen Lösemitteln oder Medien beständig, insbesondere hydrolysebeständig, sind und/oder
**dass** die organischen Polymere und/oder die Polymerpartikel hydrophob ausgebildet sind, insbesondere hydrophobe Oberflächen aufweisen, und/oder
**dass** die organischen Polymere und/oder die Polymerpartikel unpolar ausgebildet sind, insbesondere unpolare Oberflächen aufweisen, und/oder
**dass** die organischen Polymere und/oder die Polymerpartikel ein hydrophobes poröses, insbesondere mikroporöses, polymeres Netzwerk ausbilden.

8. Einheit nach einem der vorangehenden Ansprüche, **dadurch gekennzeichnet, dass** die Arylboronsäuren mindestens zwei Boronsäuregruppen -B(OH)₂ je Molekül, insbesondere zwei, drei und/oder vier Boronsäuregruppen je Molekül, aufweisen und/oder dass die Halogenaromaten mindestens zwei Halogenatome, insbesondere zwei, drei oder vier Halogenatome, insbesondere Chlor, Brom oder Iod, aufweisen, insbesondere wobei mindestens eines der beiden Edukte, insbesondere mindestens die Arylboronsäure und/oder mindestens die Halogenaromaten, mindestens zweifach funktionalisiert ist.

9. Einheit nach einem der vorangehenden Ansprüche, **dadurch gekennzeichnet, dass** die Arylboronsäuren oder die Halogenaromaten ausgewählt sind aus der Gruppe der Verbindungen gemäß den Figuren 1A, 1B und 1C und ihren Kombinationen oder Mischungen, wobei in den gemäß den Figuren 1A, 1B und 1C dargestellten Formeln
• X eine funktionelle Gruppe für die Kupplungsreaktion, und zwar für den Fall einer Arylboronsäure eine Boronsäuregruppen -B(OH)₂ und für den Fall eines Halogenaromaten ein Halogen, insbesondere Chlor, Brom oder Iod, bezeichnet;
• R, unabhängig voneinander, ein Wasserstoffatom oder einen gegebenenfalls substituierten organischen Rest, insbesondere eine Alkyl-, Alkenyl-, Alkinyl-, Aryl-, Arylalkyl-, Alkylaryl-, Alkoxy- oder Amingruppe, bezeichnet;
• Y ein Boratom oder ein Stickstoffatom bezeichnet;
• Z ein Kohlenstoffatom oder ein Siliziumatom bezeichnet.

10. Einheit nach einem der Ansprüche 1 bis 9, **dadurch gekennzeichnet, dass** die Einheit und/oder die Polymerpartikel in loser Schüttung vorliegt bzw. vorliegen, insbesondere umgeben von einer räumlichen Begrenzung, bevorzugt einem Gehäuse, einer Behausung, einer Hülle oder Hüllstruktur, einem Rahmen oder dergleichen; oder aber dass die Polymerpartikel zu einem Formkörper zusammengeführt und/oder verarbeitet sind; oder aber
dass die Polymerpartikel auf mindestens einem Träger aufgebracht sind, insbesondere hieran fixiert sind, insbesondere wobei der Träger ausgewählt ist aus textilen Materialien, Trägermaterialien für Katalysatoren, Kunststoffen, keramischen Materialien, metallischen Materialien oder deren Kombinationen,
• insbesondere wobei der Träger, insbesondere das textile Trägermaterial, gasdurchlässig, insbesondere luftdurchlässig, ausgebildet ist, insbesondere wobei der Träger eine Gasdurchlässigkeit, insbesondere Luftdurchlässigkeit, von mindestens 101•m⁻²•s⁻¹, insbesondere mindestens 301•m⁻²•s⁻¹, vorzugsweise mindestens 501•m⁻²•s⁻¹, besonders bevorzugt mindestens 100 1•m⁻²•s⁻¹, ganz besonders bevorzugt mindestens 500 1•m⁻²•s⁻¹, und/oder bis zu 10.000 1•m⁻2•s⁻¹, insbesondere bis zu 20.000 1•m⁻²•s-¹, bei einem Strömungswiderstand von 127 Pa aufweist; und/oder
• insbesondere wobei der Träger eine dreidimensionale Struktur aufweist, insbesondere wobei der Träger als vorzugsweise offenporiger Schaumstoff, besonders bevorzugt Polyurethanschaumstoff, ausgebildet ist; und/oder
• insbesondere wobei der Träger eine zweidimensionale und/oder flächige Struktur aufweist, insbesondere wobei der Träger als vorzugsweise textiles Flächengebilde ausgebildet ist, insbesondere als ein Gewebe, Gewirke, Gestricke, Gelege oder Textilverbundstoff, insbesondere Vlies (Nonwoven), und/oder insbesondere wobei der Träger ein Flächengewicht von 5 bis 1.000 g/m², insbesondere 10 bis 500 g/m², bevorzugt 25 bis 450 g/m², aufweist.

11. Einheit nach einem der vorangehenden Ansprüche, **dadurch gekennzeichnet,**
**dass** die Polymerpartikel in Pulverform oder in Kornform, bevorzugt in Kugelform, oder in Form von Agglomeraten vorliegen und/oder dass die Polymerpartikel oder deren Agglomerate Teilchengrößen im Bereich von 0,0001 µm bis 10 mm, insbesondere 0,001 µm bis 5 mm, vorzugsweise 0,005 µm bis 3 mm, besonders bevorzugt 0,01 µm bis 2 mm, ganz besonders bevorzugt 0,1 µm bis 1,5 mm, aufweisen und/oder
**dass** die Polymerpartikel ein Gesamtporenvolumen von mindestens 0,05 cm³/g, insbesondere mindestens 0,1 cm³/g, vorzugsweise mindestens 0,2 cm³/g, aufweisen und/oder
**dass** die Polymerpartikel ein Gesamtporenvolumen von bis zu 2,0 cm³/g, insbesondere bis zu 3,0 cm³/g, vorzugsweise bis zu 4,0 cm³/g, besonders bevorzugt bis zu 5,0 cm³/g, aufweisen
**dass** die Polymerpartikel ein Gesamtporenvolumen im Bereich von 0,05 cm³/g bis 5,0 cm³/g, insbesondere 0,1 cm³/g bis 4,0 cm³/g, vorzugsweise 0,2 cm³/g bis 3,0 cm³/g, aufweisen und/oder dass mindestens 20 %, insbesondere mindestens 30 %, vorzugsweise mindestens 40 %, besonders bevorzugt mindestens 50 %, des Gesamtporenvolumens der Polymerpartikel durch Mikroporen mit Porendurchmessern von ≤ 20 Å gebildet sind und/oder
**dass** 20 % bis 99 %, insbesondere 30 % bis 95 %, vorzugsweise 40 % bis 90 %, besonders bevorzugt 50 % bis 80 %, des Gesamtporenvolumens der Polymerpartikel durch Mikroporenporen mit Porendurchmessern von s 20 Å gebildet sind und/oder
**dass** das durch Mikroporen mit Porendurchmessern von ≤ 20 Å gebildete Mikroporenvolumen der Polymerpartikel im Bereich von 0,01 bis 1,5 cm³/g, insbesondere 0,02 bis 1,2 cm³/g, bevorzugt 0,05 bis 1 cm³/g, liegt.

12. Einheit nach einem der vorangehenden Ansprüche, **dadurch gekennzeichnet,**
**dass** der mittlere Porendurchmesser der Polymerpartikel höchstens 100 Å, insbesondere höchstens 50 Å, bevorzugt höchstens 30 Å, beträgt und/oder
**dass** der mittlere Porendurchmesser der Polymerpartikel im Bereich von 1 bis 100 Å, insbesondere 2 bis 75 Å, vorzugsweise 5 bis 50 Å, besonders bevorzugt 10 bis 30 Å, liegt und/oder
**dass** die BET-Oberfläche der Polymerpartikel mindestens 100 m²/g, insbesondere mindestens 200 m ²/g, vorzugsweise mindestens 250 m²/g, bevorzugt mindestens 300 m²/g, besonders bevorzugt mindestens 400 m²/g, beträgt und/oder
**dass** die BET-Oberfläche der Polymerpartikel bis zu 1.800 m2/g, insbesondere bis zu 2.000 m2/g, vorzugsweise bis zu 2.500 m²/g, besonders bevorzugt bis zu 3.000 m²/g, ganz besonders bevorzugt bis zu 6.000 m²/g, noch mehr bevorzugt bis zu 7.000 m²/g, beträgt und/oder dass die BET-Oberfläche der Polymerpartikel im Bereich von 100 m²/g bis 7.000 m²/g, insbesondere 150 bis 6.000 m²/g, vorzugsweise 200 bis 3.000 m²/g, besonders bevorzugt 225 bis 2.500 m²/g, ganz besonders bevorzugt 250 bis 2.000 m²/g, noch mehr bevorzugt 275 bis 1.800 m²/g, liegt.

13. Einheit nach einem der vorangehenden Ansprüche, **dadurch gekennzeichnet,**
**dass** die organischen Polymere und/oder Polymerpartikel nach erfolgter Kreuzkupplung, insbesondere Suzuki-Kupplung, modifiziert werden, insbesondere mittels Nachvernetzung der Polymere und/oder mittels Funktionalisierung, bevorzugt an den Aromaten und/oder an gegebenenfalls noch vorhandenen, insbesondere endständigen Halogen- und/oder Boronsäuregruppen, und/oder
**dass** die Polymerpartikel bei einem Druck von 1 bar und einer Temperatur von 77 K eine Wasserstoffspeicher- und/oder Wasserstoffbeladungskapazität von 0,1 bis 50 Gew.-%, insbesondere 0,2 bis 30 Gew.-%, vorzugsweise 0,5 bis 25 Gew.-%, bezogen auf die Polymerpartikel, aufweisen und/oder
**dass** die Polymerpartikel zusammen mit einem weiteren, aber hiervon verschiedenen partikulären porösen Material, insbesondere Adsorbens, eingesetzt oder kombiniert werden, insbesondere wobei das weitere Material ausgewählt sein kann aus der Gruppe von Aktivkohle, insbesondere kornförmiger Aktivkohle, vorzugsweise kugelförmiger Aktivkohle; Zeolithen; porösen Metalloxid- und/oder Metallpartikeln; Ionenaustauscherharzen; anorganischen Oxiden, insbesondere Siliziumdioxiden, Silicagelen und/oder Aluminiumoxiden; porösen organisch-anorganischen Hybridpolymeren; metallorganischen Gerüstmaterialien, insbesondere MOFs (*Metall Organic Frameworks*); mineralischen Granulaten; Klathraten; sowie deren Mischungen und/oder Kombinationen, und besonders bevorzugt Aktivkohle sein kann.

14. Verwendung einer Einheit, wie in einem der vorangehenden Ansprüchen definiert, für die Filtration, für die Gasreinigung, für die Katalyse, für die Gasspeicherung sowie für die Sorption, insbesondere Adsorption, vorzugsweise von Gasen.

15. Verwendung einer Einheit, wie in einem der vorangehenden Ansprüchen definiert, in Filtern und Filtermaterialien, insbesondere textilen Filtern und Filtermaterialien, in Gasreinigungsvorrichtungen, in Katalysatoren, in Gasspeichern und in Schutzbekleidung, insbesondere ABC-Schutzbekleidung.

16. Verwendung einer Einheit, wie in einem der vorangehenden Ansprüchen definiert, zur Entfernung von Schad-, Geruchs- und Giftstoffen aller Art, insbesondere aus Luft- und/oder Gasströmen, vorzugsweise in ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich.

17. Filter und Filtermaterialien, insbesondere textile Filter und Filtermaterialien, Gasreinigungsvorrichtungen, Katalysatoren, Gasspeicher oder Schutzbekleidung, insbesondere ABC-Schutzbekleidung, hergestellt unter Verwendung einer Einheit nach einem der vorangehenden Ansprüche und/oder aufweisend eine Einheit nach einem der vorangehenden Ansprüche.
